(19) Europäisches Patentamt / European Patent Office / Office européen des brevets

(11) **EP 4 465 628 A1**

(12) **EUROPEAN PATENT APPLICATION**
published in accordance with Art. 153(4) EPC

(43) Date of publication:
**20.11.2024 Bulletin 2024/47**

(21) Application number: **23740470.2**

(22) Date of filing: **12.01.2023**

(51) International Patent Classification (IPC):
$H04N\ 19/30^{(2014.01)}$     $H04N\ 19/119^{(2014.01)}$
$H04N\ 19/597^{(2014.01)}$     $H04N\ 19/184^{(2014.01)}$
$H04N\ 19/44^{(2014.01)}$     $H04N\ 19/96^{(2014.01)}$
$H04N\ 19/70^{(2014.01)}$

(52) Cooperative Patent Classification (CPC):
H04N 19/119; H04N 19/184; H04N 19/30;
H04N 19/44; H04N 19/597; H04N 19/70;
H04N 19/96

(86) International application number:
**PCT/KR2023/000574**

(87) International publication number:
**WO 2023/136627 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.01.2022 KR 20220004629**

(71) Applicant: **LG Electronics Inc.**
**Yeongdeungpo-gu**
**Seoul 07336 (KR)**

(72) Inventor: **OH, Hyunmook**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **POINT CLOUD DATA TRANSMISSION METHOD, POINT CLOUD DATA TRANSMISSION DEVICE, POINT CLOUD DATA RECEPTION METHOD, AND POINT CLOUD DATA RECEPTION DEVICE**

(57)     A point cloud data transmission method according to embodiments may comprise the steps of: encoding point cloud data; and transmitting a bitstream including the point cloud data. In addition, a point cloud data transmission device according to embodiments may comprise: an encoder for encoding point cloud data; and a transmitter for transmitting a bitstream including the point cloud data.

EP 4 465 628 A1

# FIG. 25

```
                    ┌─────────────────────────────────┐
                    │      generate SPS, GPS, LGSI     │
                    └─────────────────────────────────┘
                                     │
                                     ▼
                    ┌─────────────────────────────────┐
                    │       Determine layer-group      │ ──── S2501
                    └─────────────────────────────────┘
                                     │
                                     ▼
                    ┌─────────────────────────────────┐
                    │        Determine subgroup        │ ──── S2502
                    └─────────────────────────────────┘
                                     │
                                     ▼
                    ◇────────────────────────────────◇ ──── S2503
                     ╲       Subgroup changed?       ╱   No
                      ◇────────────────────────────◇
                                  │ Yes
                                  ▼
                    ┌─────────────────────────────────┐
                    │       Save and load encdoer      │ ──── S2504
                    └─────────────────────────────────┘
                                     │
                                     ▼
                    ┌─────────────────────────────────┐
                    │   update geometry occupancy atlas│ ──── S2505
                    └─────────────────────────────────┘
                                     │
                                     ▼
                    ┌─────────────────────────────────┐
                    │           Encode node            │ ──── S2506
                    └─────────────────────────────────┘
                                     │
                                     ▼
          No        ◇────────────────────────────────◇ ──── S2507
          node++     ╲         End of nodes?         ╱
                      ◇────────────────────────────◇
                                  │ Yes
                                  ▼
          No        ◇────────────────────────────────◇ ──── S2508
          depth++    ╲          End of tree?         ╱
                      ◇────────────────────────────◇
                                  │ Yes
                                  ▼
                    ┌─────────────────────────────────┐
                    │      generate data unit headers  │
                    └─────────────────────────────────┘
                                     │
                                     ▼
                    ┌─────────────────────────────────┐
                    │    generate geometry bistreams   │
                    └─────────────────────────────────┘
                                     │
                                     ▼
                    ┌─────────────────────────────────┐
                    │         End of encoding          │
                    └─────────────────────────────────┘
```

**Description**

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

To achieve these objects and other advantages and in accordance with the purpose of the disclosure, as embodied and broadly described herein, a method of transmitting point cloud data may include encoding point cloud data, and transmitting a bitstream containing the point cloud data. In another aspect of the present disclosure, a method of receiving point cloud data may include receiving a bitstream containing point cloud data, and decoding the point cloud data.

[Advantageous Effects]

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.
The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;

FIG. 5 shows an example of voxels according to embodiments;
FIG. 6 shows an example of an octree and occupancy code according to embodiments;
FIG. 7 shows an example of a neighbor node pattern according to embodiments;
FIG. 8 illustrates an example of point configuration in each LOD according to embodiments;
FIG. 9 illustrates an example of point configuration in each LOD according to embodiments;
FIG. 10 illustrates a point cloud decoder according to embodiments;
FIG. 11 illustrates a point cloud decoder according to embodiments;
FIG. 12 illustrates a transmission device according to embodiments;
FIG. 13 illustrates a reception device according to embodiments;
FIG. 14 illustrates an exemplary structure operable in connection with point cloud data transmission/reception methods/devices according to embodiments;
FIG. 15 illustrates a process of encoding, transmission, and decoding point cloud data according to embodiments;
FIG. 16 shows a layer-based point cloud data configuration and a structure of geometry and attribute bitstreams according to embodiments;
FIG. 17 shows a configuration of a bitstream according to embodiments;
FIG. 18 illustrates a bitstream sorting method according to embodiments;
FIG. 19 illustrates a method of selecting geometry data and attribute data according to embodiments;
FIG. 20 illustrates a method of configuring a slice including point cloud data according to embodiments;
FIG. 21 illustrates a geometry coding layer structure according to embodiments;
FIG. 22 illustrates a structure of a layer group and subgroups according to embodiments;
FIG. 23 illustrates a representation of layer group-based point cloud data according to embodiments;
FIG. 24 illustrates devices/methods for transmitting and receiving point cloud data according to embodiments;
FIG. 25 illustrates an encoding method according to embodiments;
FIG. 26 illustrates a decoding method according to embodiments;
FIG. 27 illustrates a bitstream configuration according to embodiments;
FIGS. 28A and 28B show syntax of a sequence parameter set according to embodiments;
FIG. 29 shows syntax of a dependent geometry data unit header according to embodiments;
FIG. 30 shows syntax of a layer group structure inventory according to embodiments;
FIG. 31 illustrates a point cloud data transmission/reception device/method, according to embodiments;
FIG. 32 illustrates a point cloud data transmission/reception device/method according to embodiments;
FIG. 33 illustrates a point cloud data transmission/reception device/method according to embodiments;
FIG. 34 illustrates a method of transmitting point cloud data according to embodiments; and
FIG. 35 illustrates a method of receiving point cloud data according to embodiments.

[Mode for Disclosure]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

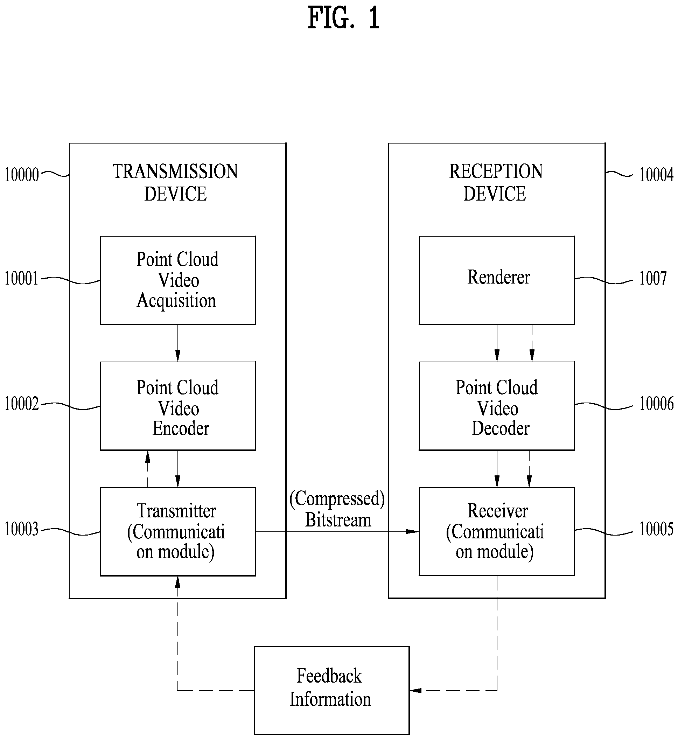

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

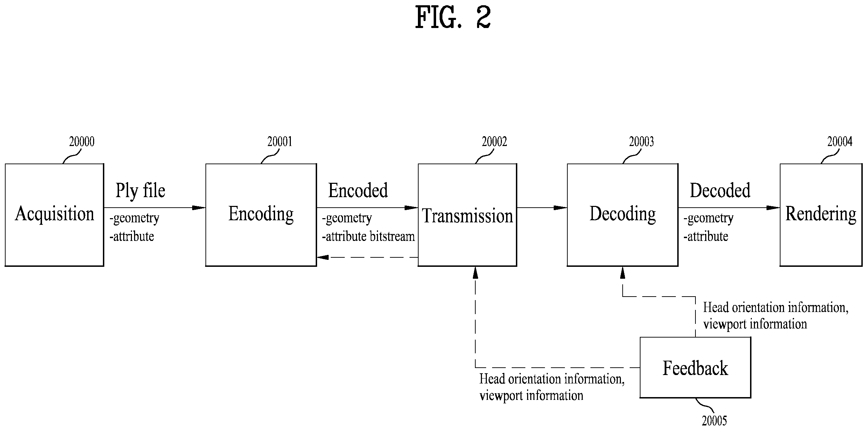

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VRjAR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

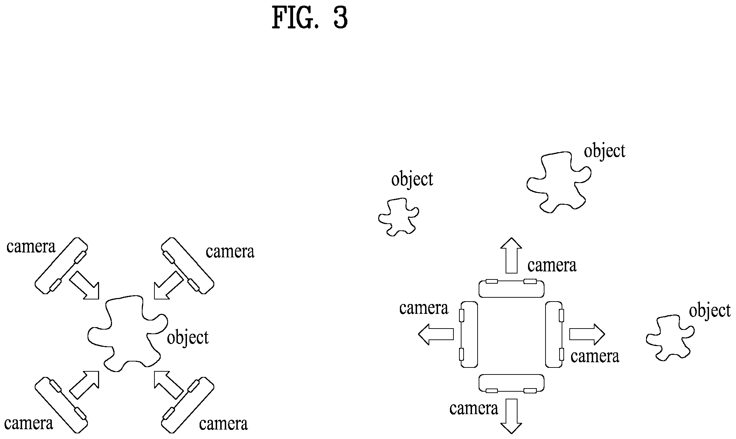

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VRjAR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (e.g., a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

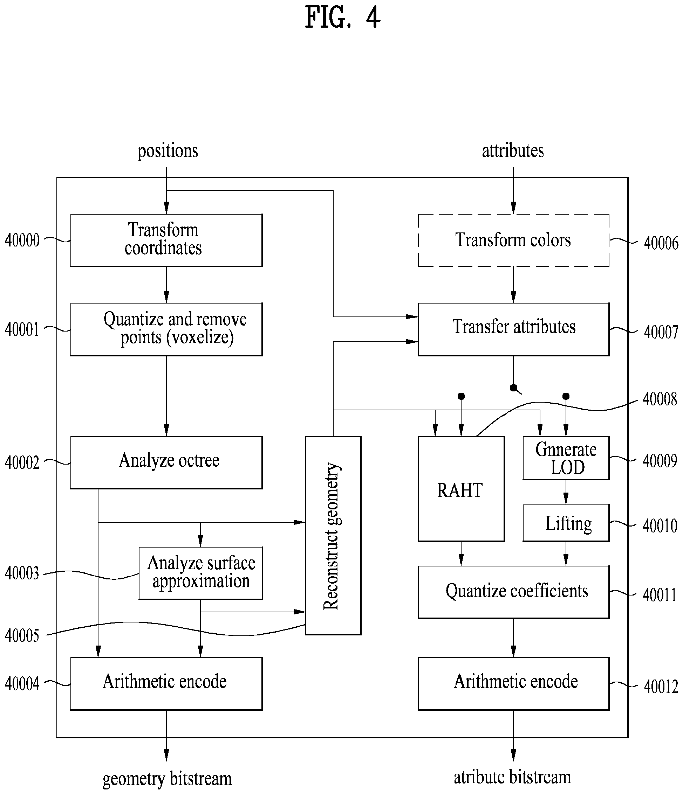

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometry reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (e.g., a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

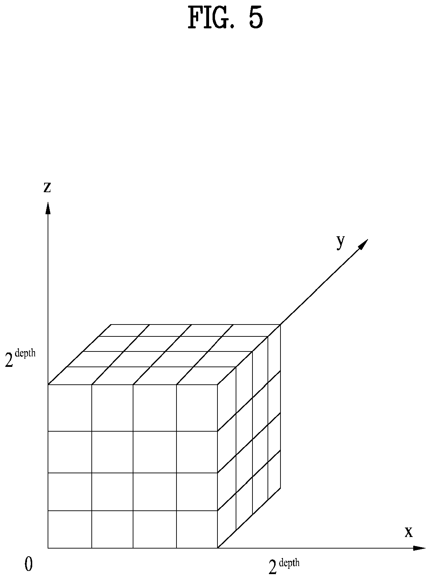

FIG. 5 shows an example of voxels according to embodiments.

FIG. 5 shows voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

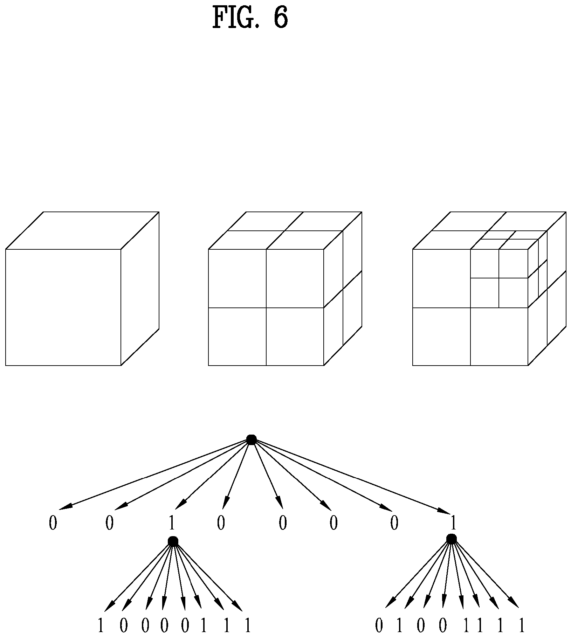

FIG. 6 shows an example of an octree and occupancy code according to embodiments.

As described with reference to FIGS. 1 to 4, the point cloud content providing system (point cloud video encoder 10002) or the point cloud encoder (e.g., the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, $2^d$ may be set to a value constituting the smallest bounding box surrounding all points of the point cloud content (or point cloud video). Here, d denotes the depth of the octree. The value of d is determined in the following equation. In the following equation, ($x^{int}_n$, $y^{int}_n$, $z^{int}_n$) denotes the positions (or position values) of quantized points.

$$d= \text{Ceil}\left(\text{Log2}\left(\text{Max}\left(x^{int}_n, y^{int}_n, z^{in}_n, n = 1, ..., N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 40004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (e.g., the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

i)

$$\begin{bmatrix} \mu_x \\ \mu_y \\ \mu_z \end{bmatrix} = \frac{1}{n}\sum_{i=1}^{n}\begin{bmatrix} x_i \\ y_i \\ z_i \end{bmatrix}; \;\; ii) \;\; \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}; \;\; iii) \;\; \begin{bmatrix} \sigma_x^2 \\ \sigma_y^2 \\ \sigma_z^2 \end{bmatrix} = \sum_{i=1}^{n}\begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Triangles formed from vertices ordered 1,...,n

n triangles
3 (1,2,3)
4 (1,2,3), (3,4,1)
5 (1,2,3), (3,4,5), (5,1,3)
6 (1,2,3), (3,4,5), (5,6,1), (1,3,5)
7 (1,2,3), (3,4,5), (5,6,7), (7,1,3), (3,5,7)
8 (1,2,3), (3,4,5), (5,6,7), (7,8,1), (1,3,5), (5,7,1)
9 (1,2,3), (3,4,5), (5,6,7), (7,8,9), (9,1,3), (3,5,7), (7,9,3)
10 (1,2,3), (3,4,5), (5,6,7), (7,8,9), (9,10,1), (1,3,5), (5,7,9), (9,1,5)
11 (1,2,3), (3,4,5), (5,6,7), (7,8,9), (9,10,11), (11,1,3), (3,5,7), (7,9,11), (11,3,7)
12 (1,2,3), (3,4,5), (5,6,7), (7,8,9), (9,10,11), (11,12,1), (1,3,5), (5,7,9), (9,11,1), (1,5,9)

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

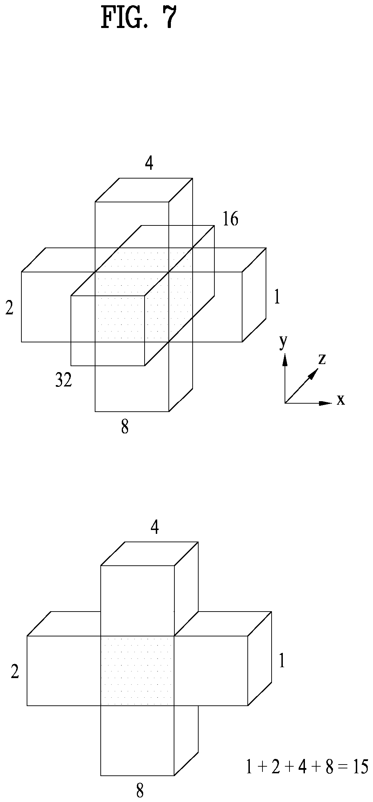

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (e.g., the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The upper part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The lower part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

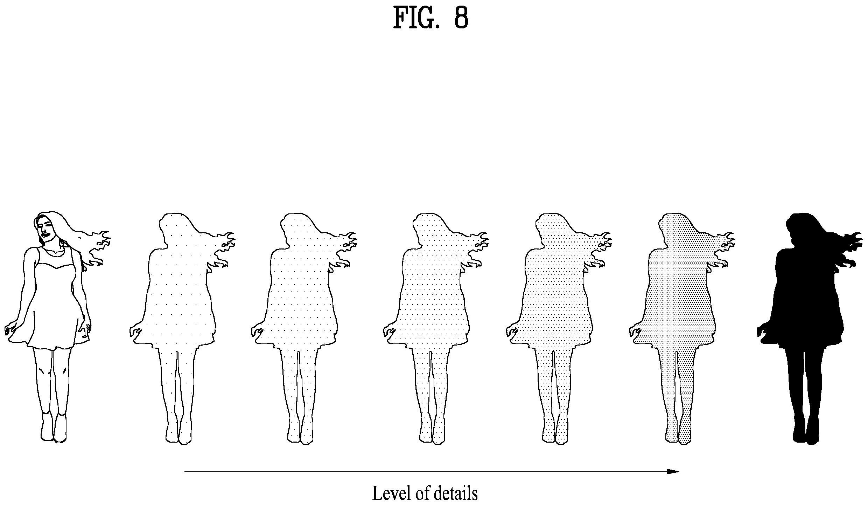

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 40009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

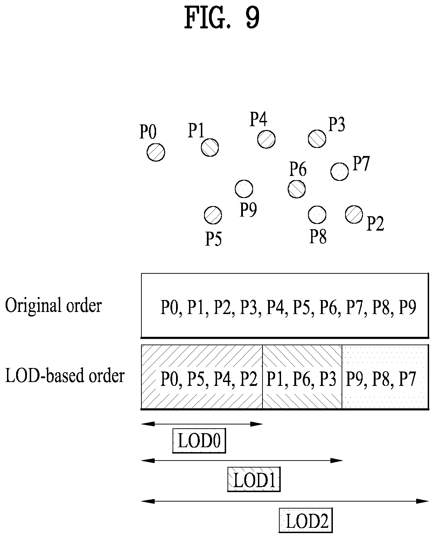

FIG. 9 illustrates an example of point configuration for each LOD according to embodiments.

As described with reference to FIGS. 1 to 8, the point cloud content providing system, or the point cloud encoder (e.g., the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 40011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

TABLE 1 Attribute prediction residuals quantization pseudo code

```
int PCCQuantization(int value, int quantStep) {
if( value >=0) {
return floor(value / quantStep + 1.0 / 3.0);
} else {
return -floor(-value / quantStep + 1.0 / 3.0);
}
}
```

TABLE 2 Attribute prediction residuals inverse quantization pseudo code

```
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (e.g., the arithmetic encoder 40012) may perform entropy coding on the attributes of the corresponding point without performing the above-described operation.

The point cloud encoder according to the embodiments (e.g., the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l\ x,y,z}$ denotes the average attribute value of voxels at level l. $g_{l\ x,y,z}$ may be calculated based on $g_{l+1\ 2x,y,z}$ and $g_{l+1\ 2x+1,y,z}$. The weights for $g_{l\ 2x,y,z}$ and $g_{l\ 2z+1,y,z}$ are w1 = $w_{l\ 2z,y,z}$ and w2 = $w_{l\ 2x+1,y,z}$.

$$\begin{bmatrix} g_{l-1\ x,y,z} \\ h_{l-1\ x,y,z} \end{bmatrix} = T_{w1\ w2} \begin{bmatrix} g_{l\ 2x,y,z} \\ g_{l\ 2x+1,y,z} \end{bmatrix}, \quad T_{w1\ w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\ x,y,z}$ is a low-pass value and is used in the merging process at the next higher level. $h_{l-1\ x,y,z}$ denotes high-pass coefficients. The high-pass coefficients at each step are quantized and subjected to entropy coding (e.g., encoding by the arithmetic encoder 400012). The weights are calculated as $w_{l-1\ x,y,z} = w_{l\ 2x,y,z} + w_{l\ 2x+1,y,z}$. The root node is created through the $g_{1\ 0,0,0}$ and $g_{1\ 0,0,1}$ as follows.

$$\begin{bmatrix} gDC \\ h_{0_{0,0,0}} \end{bmatrix} = T_{w1000\ w1001} \begin{bmatrix} g_{1\ 0,0,0z} \\ g_{1_{0,0,1}} \end{bmatrix}$$

The value of gDC is also quantized and subjected to entropy coding like the high-pass coefficients.

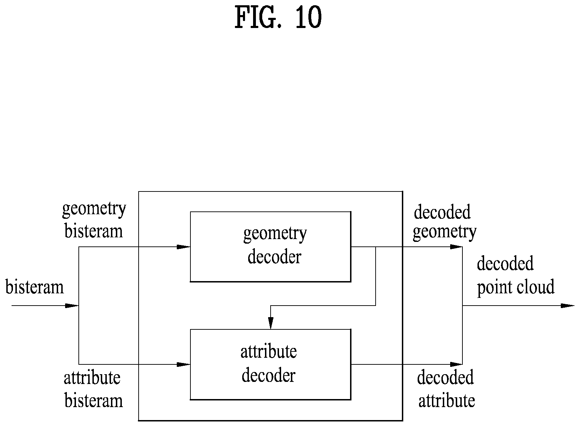

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

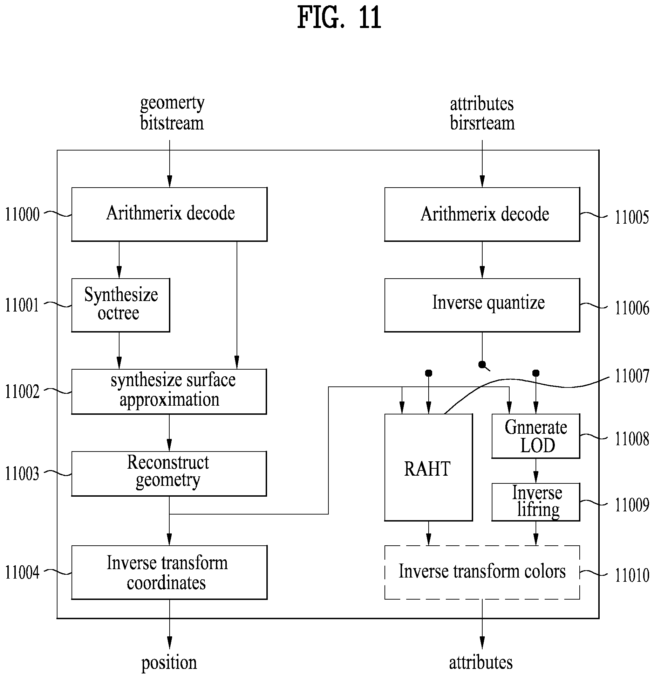

FIG. 11 illustrates a point cloud decoder according to embodiments.

The point cloud decoder illustrated in FIG. 11 is an example of the point cloud decoder illustrated in FIG. 10, and may perform a decoding operation, which is a reverse process to the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the reverse process to the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

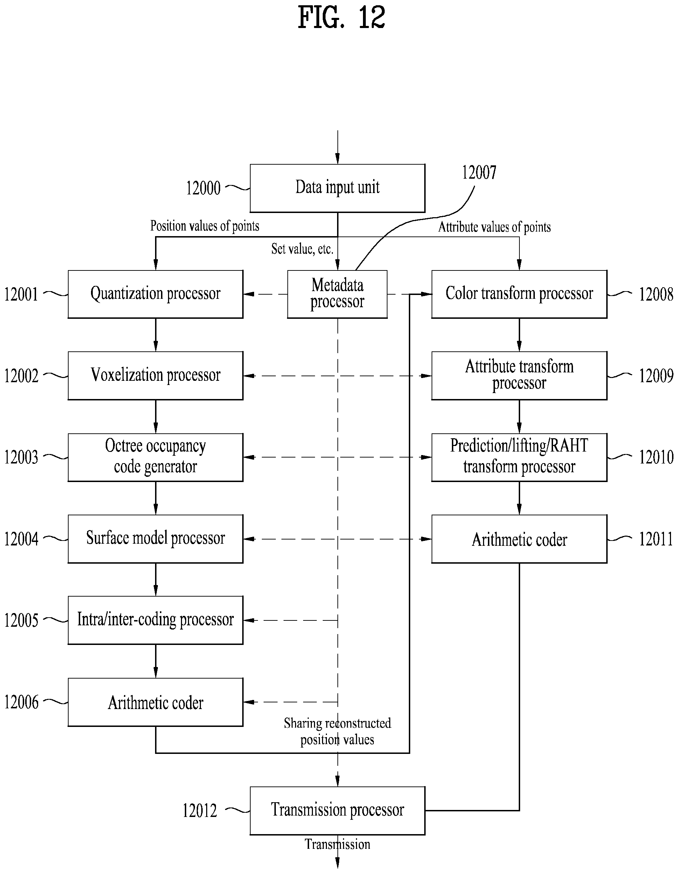

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 12002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud encoder (e.g., the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9.

Also, it performs an operation and/or method the same as or similar to the operation and/or method of the color transformer 40006 described with reference to FIG. 4 is performed. A detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. A detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom0$^0$ and one or more attribute bitstreams Attr0$^0$ and Attr1$^0$.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

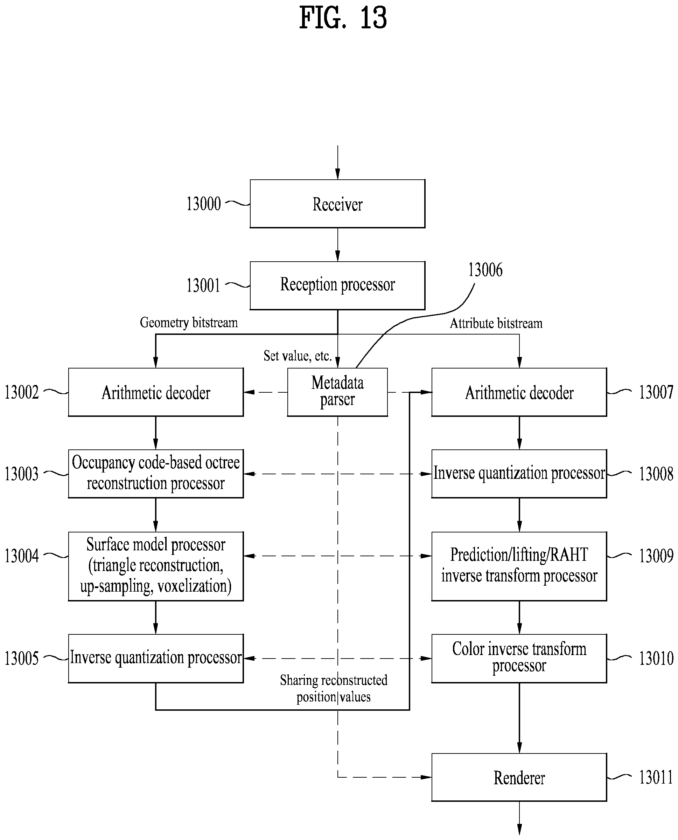

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment may include a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction/lifting/RAHT inverse transform processor 13009, a color inverse transform processor 13010, and/or a renderer 13011. Each element for decoding according to the embodiments may perform a reverse process to the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (e.g., triangle reconstruction, up-sampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

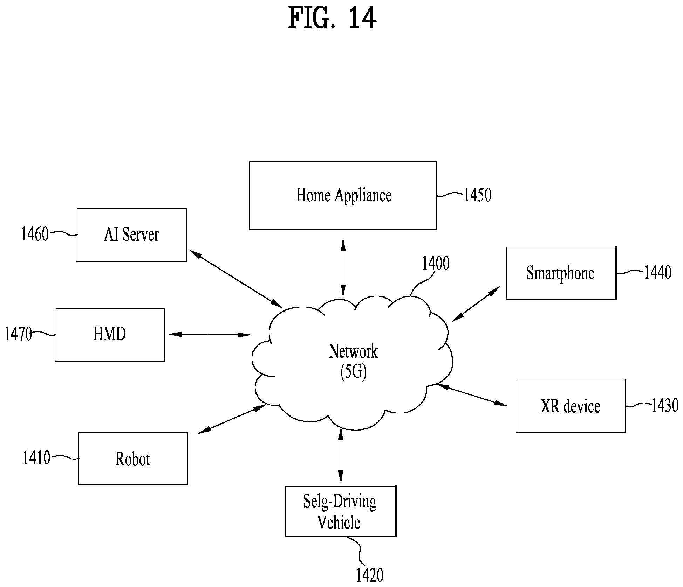

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission device and reception device according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<PCC+XR+Mobile phone>

The XR/PCC device 1430 may be implemented as a mobile phone 1440 by applying PCC technology.

The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.

The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.

The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described with reference to FIGS. 1 to 14, point cloud data is composed of a set of points, each of which may have geometry data (geometry information) and attribute data (attribute information). The geometry data is the three-dimensional position of each point (e.g., the coordinate values of the x, y, and z axes). That is, the position of each point is indicated by parameters in a coordinate system representing a three-dimensional space (e.g., the parameters (x, y, z) of the three axes representing the space, the x, y, and z axes). The attribute information may include color (RGB, YUV, etc.), reflectance, normals, and transparency. The attribute information may be represented in the form of a scalar or vector.

According to embodiments, point cloud data may be classified into category 1 for static point cloud data, category 2 for dynamic point cloud data, and category 3 for point cloud data acquired through dynamic movement, depending on the type and acquisition method of the point cloud data. Category 1 is composed of a point cloud of a single frame with a high density of points for an object or space. Category 3 data may be divided into frame-based data with multiple frames acquired while moving, and fused data of a single frame matching a point cloud acquired for a large space by a LiDAR sensor with a color image acquired as a 2D image.

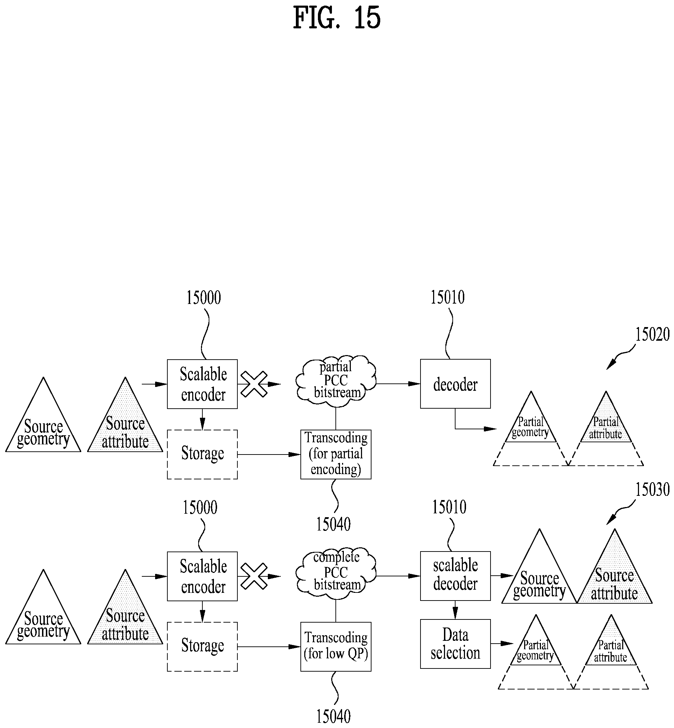

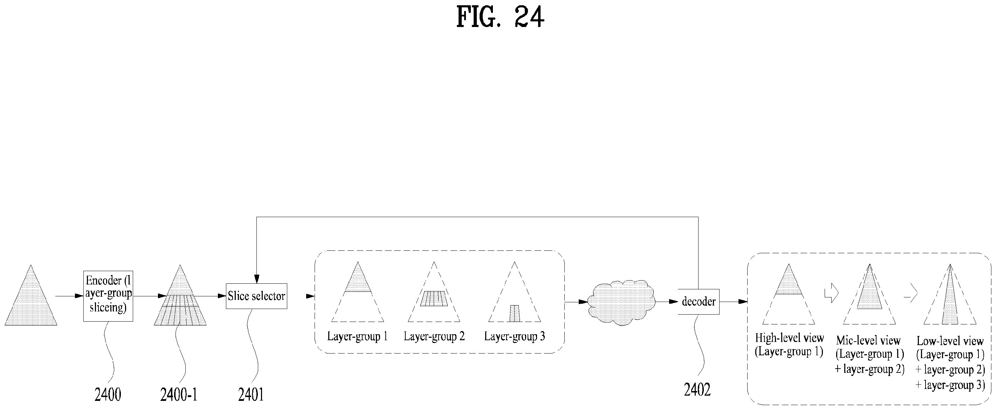

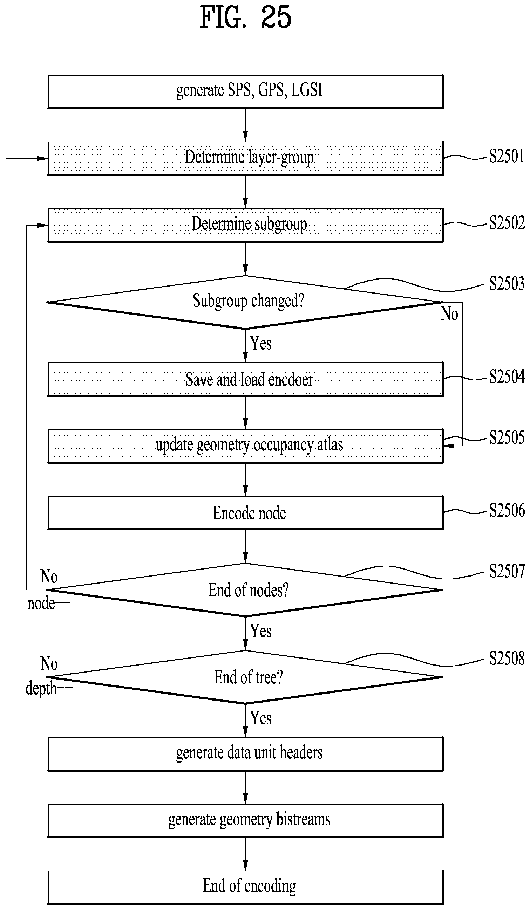

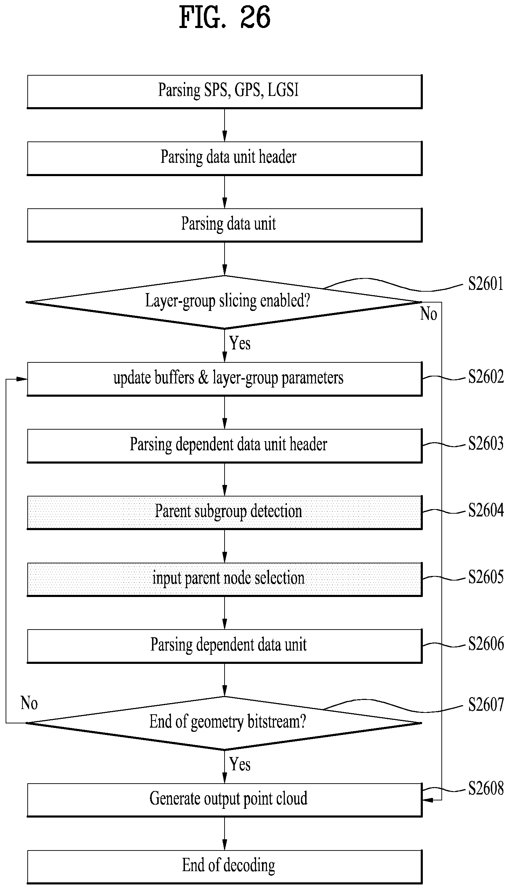

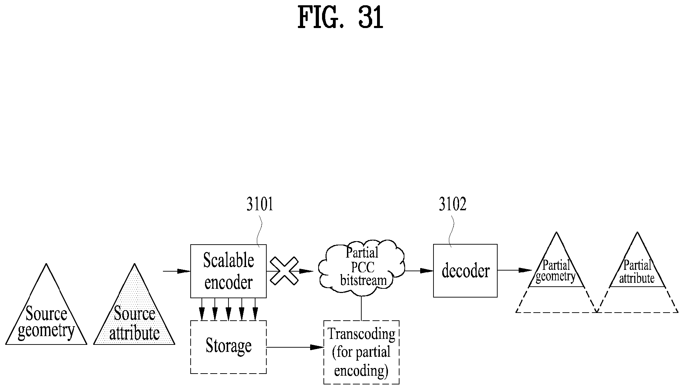

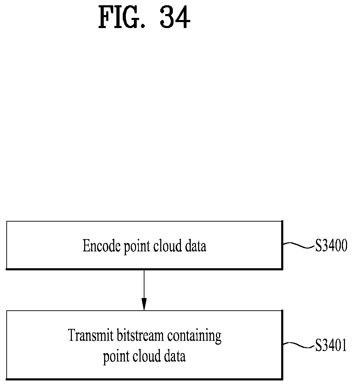

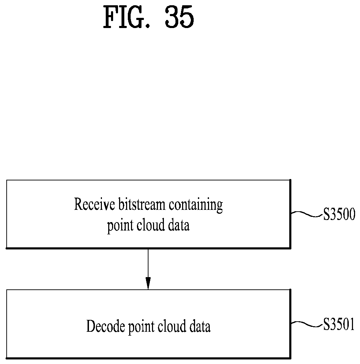

The point cloud data transmission method/device according to embodiments is construed as a term referring to the transmission device 10000, point cloud video encoder 10002, and transmitter 10003 in FIG. 1, the acquisition 20000/encoding 20001/transmission 20002 in FIG. 2, the encoder in FIG. 4, the transmission device in FIG. 12, the device in FIG. 14, the encoders in FIGS. 15 and 24, the encoders in FIGS. 31 to 33, the transmission methods in FIGS. 25 and 34, and the like. The point cloud data reception method/device according to embodiments is construed as a term referring to the reception device 10004, receiver 10005, and point cloud video decoder 10006 in FIG. 1, the transmission 20002/decoding 20003/rendering 20004 in FIG. 2, the decoder in FIGS. 10 and 11, the reception device in FIG. 13, the device in FIG. 14, the decoders in FIGS. 15 and 24, the decoders in FIGS. 31 to 33, the reception method in FIGS. 26 and 35, and the like.

The point cloud data reception method/device according to embodiments is construed as a term referring to the reception device 10004, receiver 10005, and point cloud video decoder 10006 in FIG. 1, the transmission 20002/decoding 20003/rendering 20004 in FIG. 2, the decoder in FIGS. 10 and 11, the reception device in FIG. 13, the device in FIG. 14, the decoders in FIGS. 15 and 24, the decoders in FIGS. 31 to 33, the reception method in FIGS. 26 and 35, and the like.

The method/device for transmitting/receiving point cloud data according to the embodiments may be referred to as a method/device according to the embodiments.

According to embodiments, geometry data, geometry information, position information, and the like constituting the point cloud data are construed as having the same meaning. Attribute data, attribute information, and the like constituting point cloud data are construed as having the same meaning.

The method/device according to embodiments may perform a method of partitioning and transmitting/receiving point cloud data for local access (slice segmentation for spatial random access).

Embodiments include a method for efficiently supporting selective decoding of a part of data due to a receiver performance or a transmission speed in transmitting and receiving point cloud data, when necessary. Embodiments include a method for selecting necessary information or removing unnecessary information in a bitstream unit by dividing geometry and attribute data delivered in data units into semantic units such as geometry octree and Level of Detail (LoD).

Embodiments include a method of configuring a data structure composed of a point cloud. More specifically, embodiments disclose a packing and signaling method for effectively transferring PCC data configured based on a layer, and include a method of applying the packing and signaling method to a scalable PCC based service. In particular, embodiments include a method of configuring slice segments and transmitting and receiving the same so as to be more suitable for a scalable PCC service when a direct compression mode is used for position compression. Also, embodiments may provide a compression structure for efficiently storing and transmitting mass point cloud data having a wide distribution and high point density.

Referring to FIGS. 4 and 11, point cloud data is composed of a position (e.g., XYZ coordinates) and attributes (e.g., color, reflectance, intensity, grayscale, opacity, etc.) of each datum. In point cloud compression (PCC), octree-based compression is performed to efficiently compress distribution characteristics of uneven distribution in three-dimensional space, and attribute information is compressed based thereon. FIGS. 4 and 11 are flowcharts for the transmitting and receiving sides of the PCC. Operations according to embodiments may be processed by each component of the transmitting and receiving sides of the PCC.

FIG. 15 illustrates a process of encoding, transmission, and decoding point cloud data according to embodiments.

The components of the processes or methods illustrated in FIG. 15 may be processes or methods performed by hardware, software, processors, and/or any combination thereof.

A point cloud encoder 15000 is a point cloud data transmission device according to embodiments carrying out a transmission method according to embodiments, and may scalably encode and transmit point cloud data.

A point cloud decoder 15010 is a reception device according to embodiments carrying out a reception method according to embodiments, and may scalably decode the point cloud data.

The source data received by the encoder 15000 may be point cloud data, including geometry data and/or attribute data.

The encoder 15000 may scalably encode the point cloud data and not directly generate a partial PCC bitstream.

Instead, when it receives full geometry data and full attribute data, it may store the data in a storage connected to the encoder. Then, the encoder may perform transcoding for partial encoding, and generate and transmit a partial PCC bitstream. The decoder 15010 may receive and decode the partial PCC bitstream to reconstruct partial geometry and/or partial attributes.

Upon receiving the full geometry and full attributes, the encoder 15000 may store the data in the storage connected to the encoder, and transcode the point cloud data with a low quantization parameter (QP) to generate and transmit a complete PCC bitstream. The decoder 15010 may receive and decode the complete PCC bitstream to reconstruct full geometry and/or full attributes. Also, the decoder 15010 may select a partial geometry and/or a partial attribute from the complete PCC bitstream through data selection.

The method/device according to the embodiment compresses and transmits the point cloud data by dividing the position information about data points and feature information such as color/brightness/reflectance, which are the point cloud data, into geometry information and attribute information. In this case, an octree structure having layers may be configured according to the degree of detail or PCC data may be configured according to levels of detail (LoDs). Then, scalable point cloud data coding and representation may be performed based the configured structure or data. In this case, only a part of the point cloud data may be decoded or represented due to the performance of the receiver or the transfer rate.

In this process, the method/device according to the embodiments may remove unnecessary data in advance. When only a part of the scalable PCC bitstream needs to be transmitted (i.e., only some layers are decoded in scalable decoding), there is no way to select and send only the necessary part. Therefore, 1) the necessary part needs to be re-encoded (15020) after decoding, or 2) the receiver should selectively apply the bitstream after the whole bitstream is transferred thereto

(15030). However, in case 1), delay may occur due to the time for decoding and re-encoding (15020). In case 2), bandwidth efficiency may be degraded due to transmission of unnecessary data. Further, when a fixed bandwidth is used, data quality may need to be lowered for transmission (15030).

Accordingly, the method/device according to the embodiments may define a slice segmentation structure of point cloud data, and signal a scalable layer and slice structure for scalable transmission.

In embodiments, to ensure efficient bitstream delivery and decoding, the bitstream may be divided into specific units to be processed.

For octree-based geometry compression, the method/device for transmitting and receiving point cloud data according to the embodiments may use entropy-based coding and direct coding together. In this case, a slice configuration for efficiently utilizing scalability is needed.

In addition, the point cloud data transmission/reception method/device according to embodiments may address a delay issue caused by a large amount of bitstream that is processed to access a region of interest in processing a large amount of point cloud data having a wide distribution and high point density.

The point cloud data transmission/reception method/device according to embodiments may employ a hierarchical point cloud data structure for low-delay compression of a large amount of point cloud data. The hierarchical point cloud data structure may represent a tree structure, such as an octree or levels of detail (LoD). The encoder process according to embodiments may utilize a save and load encoder, a geometry occupancy atlas update, and the like. The decoder process according to embodiments may utilize detection of parent subgroups, input parent node selection, and the like.

The tree structure according to the embodiments may represent a data structure that progressively increases in data density with level or depth. The tree structure may be constructed in a variety of ways in addition to the octree or LoD.

In the method/device according to embodiments, a segmentation structure of slices for point cloud data is proposed.

In the methods/devices according to embodiments, signaling information related to a scalable layer and slice structure for scalable transmission is proposed.

In the method/device according to embodiments, a definition of a layer group and/or a subgroup and slice segmentation are proposed.

Regarding the methods/devices according to embodiments, a hierarchical point cloud data structure for low-delay compression of a large amount of point cloud data is proposed.

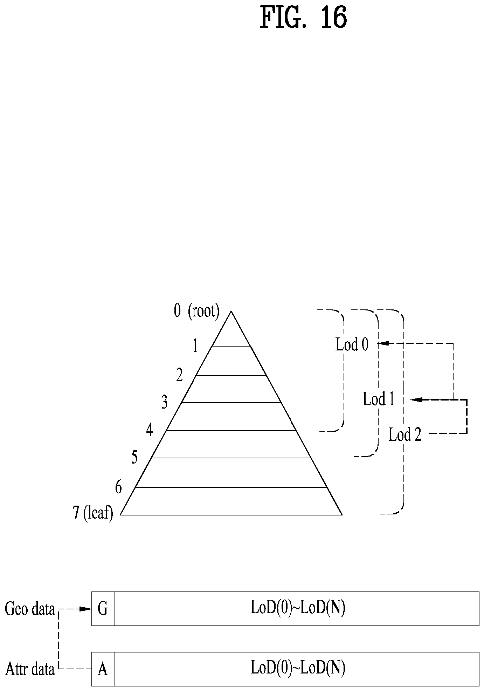

FIG. 16 shows a layer-based point cloud data configuration and a structure of geometry and attribute bitstreams according to embodiments.

The transmission/reception method/device according to embodiments may configure layer-based point cloud data, as shown in FIG. 16, for efficient transmission and decoding by selective delivery and decoding of data in a bitstream unit.

The transmission/reception method/device according to the embodiments may configure layer-based point cloud data as shown in FIG. 16 to encode and decode the point cloud data.

Layering of point cloud data may have a layer structure in terms of SNR, spatial resolution, color, temporal frequency, bit depth, or the like depending on the application field, and may configure layers in a direction in which data density increases based on the octree structure or LOD structure.

The methods/devices according to the embodiments may configure, encode, and decode a geometry bitstream and an attribute bitstream based on the layering as shown in FIG. 16.

A bitstream acquired through point cloud compression by the transmission device/encoder according to the embodiments may be divided into a geometry data bitstream and an attribute data bitstream according to the type of data and transmitted.

Each bitstream according to the embodiments may be composed of slices. Regardless of layer information or LoD information, the geometry data bitstream and the attribute data bitstream may each be configured as one slice and delivered. In this case, when only a part of the layers or LoDs is to be used, operations of 1) decoding the bitstream, 2) selecting only a desired part and removing unnecessary parts, and 3) performing encoding again based on only the necessary information may be required.

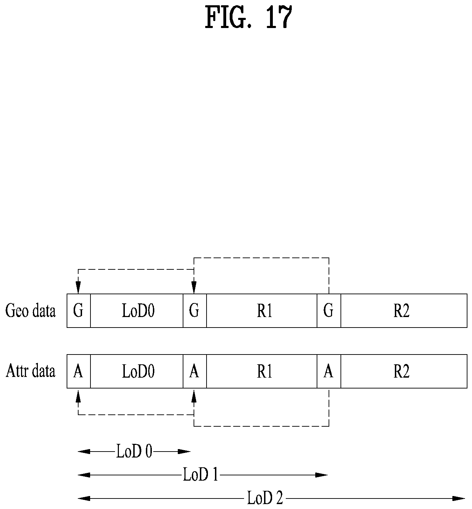

FIG. 17 shows a bitstream configuration according to embodiments.

The transmission method/device according to the embodiments may generate a bitstream as shown in FIG. 17, and the reception method/device according to the embodiments may decode point cloud data contained in the bitstream as shown in FIG. 17.

Bitstream configuration according to embodiments

Embodiments may employ a method of dividing the bitstream into layers (levels of LoD or depths of an octree) to avoid unnecessary intermediate steps.

For example, in the case of the LoD-based PCC technique, a lower LoD is included in a higher LoD. Information included in the current LoD but not included in the previous LoD, that is, information newly included in each LoD may be referred to as R (Rest). As shown in FIG. 17, the initial LoD information and the information R newly included in each LoD may be divided and transmitted in each independent unit.

The transmission method/device according to the embodiments may encode geometry data and generate a geometry bitstream. A geometry bitstream may be configured for each LOD or layer. The geometry bitstream may include a header (geometry header) for each LOD or layer. The header may include reference information for the next LOD or the next layer. The current LOD (layer) may further include information R (geometry data), which is not included in the previous LOD (layer).

The transmission method/device according to the embodiments may encode attribute data and generate an attribute bitstream. An attribute bitstream may be configured for each LOD or layer, and the attribute bitstream may include a header (attribute header) for each LOD or layer. The header may include reference information for the next LOD or the next layer. The current LOD (layer) may further include information R (attribute data), which is not included in the previous LOD (layer).

The reception method/device according to the embodiments may receive a bitstream composed of LODs or layers and efficiently decode only necessary data without any complicated intermediate process.

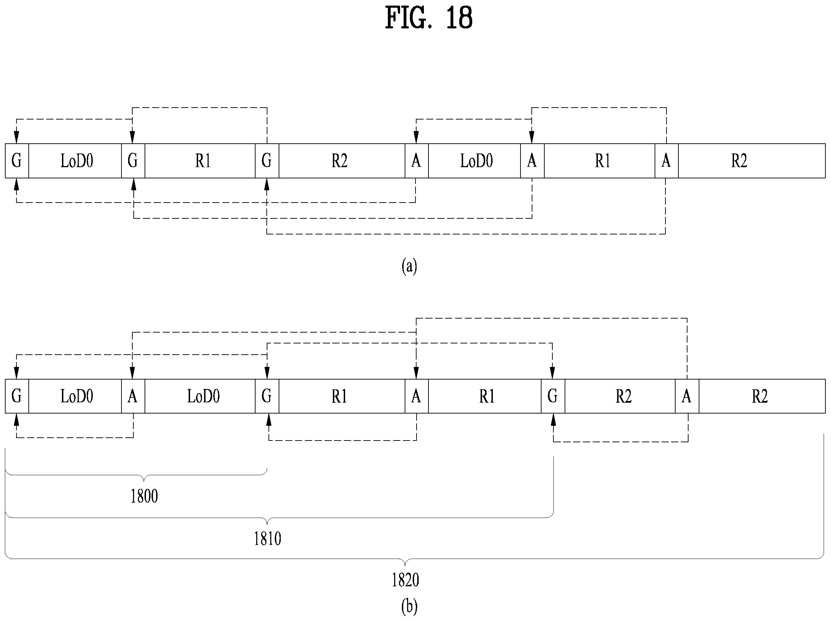

FIG. 18 illustrates a bitstream sorting method according to embodiments.

The method/device according to the embodiments may sort the bitstreams of FIG. 17 as shown in FIG. 18.

Bitstream sorting method according to embodiments

In transmitting a bitstream, the transmission method/device according to the embodiments may serially transmit geometry and attributes as shown in FIG. 18. In this operation, depending on the type of data, the whole geometry information (geometry data) may be transmitted first, and then the attribute information (attribute data) may be transmitted. In this case, the geometry information may be quickly reconstructed based on the delivered bitstream information.

In FIG. 18-(a), for example, layers (LODs) containing geometry data may be positioned first in the bitstream, and layers (LODs) containing attribute data may be positioned after the geometry layers. Since the attribute data is dependent on the geometry data, the geometry layer may be placed first. In addition, the positions may be changed differently according to embodiments. Reference may also be made between geometry headers or between an attribute header and a geometry header.

Referring to FIG. 18-(b), bitstreams constituting the same layer containing geometry data and attribute data may be collected and delivered. In this case, by using a compression technique capable of parallel decoding of geometry and attributes, the decoding execution time may be shortened. In this case, information that needs to be processed first (lower LoD, wherein geometry must precede attribute) may be placed first.

A first layer 1800 contains geometry data and attribute data corresponding to the lowest LOD 0 (layer 0) along with each header. A second layer 1810 includes LOD 0 (layer 0), and also contains geometry data and attribute data about points for a new and more detailed layer 1 (LOD 1), which are not included in LOD 0 (layer 0), as information R1. A third layer 1820 may be subsequently placed in a similar manner.

The transmission/reception method/device according to the embodiments may efficiently select a layer (or LoD) desired in an application field at a bitstream level when a bitstream is transmitted and received. In the bitstream sorting method according to the embodiments, collecting and transmitting geometry information (FIG. 18) may produce an empty part in the middle after the bitstream level selection. In this case, the bitstream may need to be rearranged. In the case where geometry and attributes are bundled and delivered according to each layer (FIG. 18), unnecessary information may be selectively removed according to the application field as follows.

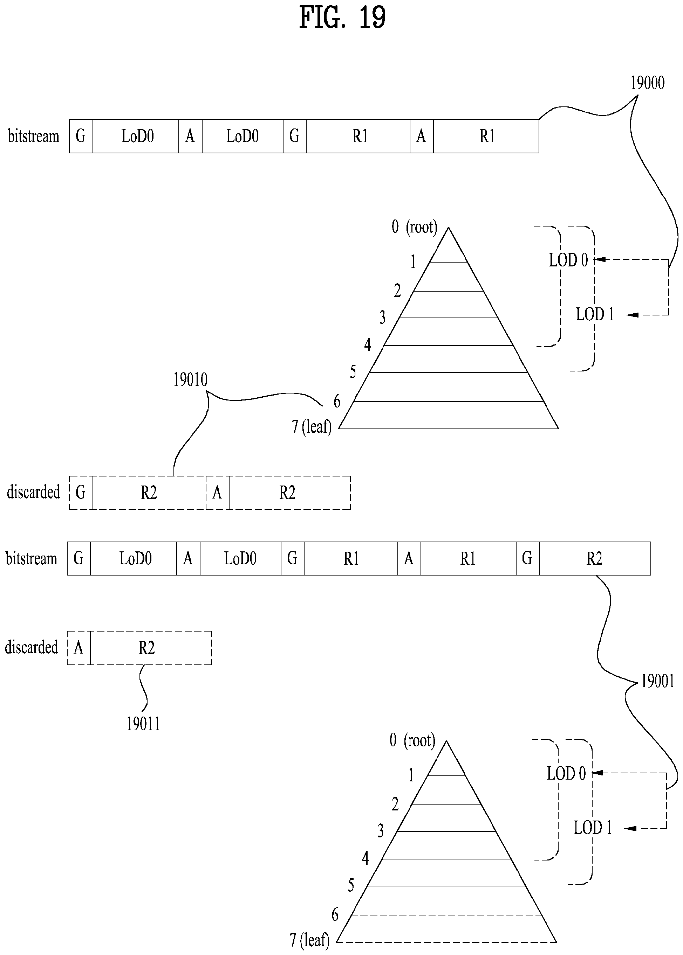

FIG. 19 illustrates a method of selecting geometry data and attribute data according to embodiments.

When a bitstream needs to be selected, the method/device according to the embodiments may select data at the bitstream level as shown in FIG. 19: 1) symmetric selection of geometry and attributes; 2) asymmetrical selection of geometry and attributes; or 3) A combination of the two methods.

1) Symmetrical geometry-attribute selection

FIG. 19 shows a case where data belonging to LoD1 (LOD 0 +R1) is selected (19000) and transmitted or decoded, and information corresponding to R2 (the new part of LOD 2) corresponding to a higher layer is removed (19010) to transmit and decode the data.

2) Asymmetric geometry and attribute selection

The method/device according to the embodiments may deliver geometry and attributes asymmetrically. Attribute R2 19011 of a higher layer may be removed, and all the geometry (from level 0 (root level) to level 7 (leaf level) of an octree structure of a triangle) may be selected and transmitted/decoded (19001).

Referring to FIG. 16, when point cloud data is represented in an octree structure and hierarchically divided into LODs (or layers), scalable encoding/decoding (scalability) may be supported.

The scalability function according to the embodiments may include slice level scalability and/or octree level scalability.

The level of detail (LoD) according to the embodiments may be used as a unit for representing a set of one or more octree layers. In addition, it may mean a bundle of octree layers to be configured as a slice.

In attribute encoding/decoding, the LOD according to the embodiments may be extended and used as a unit for dividing data in detail in a broader sense.

Spatial scalability by an actual octree layer (or scalable attribute layer) may be provided for each octree layer. However, when scalability is configured in slices before bitstream parsing, selection may be made in LoDs according to embodiments.

In the octree structure, LOD0 may correspond to the root level to level 4, LOD1 may correspond to the root level to level 5, and LOD2 may correspond to the root level to level 7, which is the leaf level.

That is, as shown in FIG. 16, when scalability is utilized in slices, as in the case of scalable transmission, the provided scalable step may correspond to three steps of LoD0, LoD1, and LoD2, and the scalable step that may be provided by the octree structure in the decoding operation may correspond to eight steps from the root to the leaf.

According to embodiments, in FIG. 16, for example, when LoD0 to LoD2 are configured as respective slices, a transcoder (the transcoder 15040 of FIG. 15) of the receiver or the transmitter may 1) select LoD0 only, 2) select LoD0 and LoD1, or 3) select LoD0, LoD1, and LoD2, for scalable processing.

Example 1: When only LoD0 is selected, the maximum octree level may be 4, and one scalable layer may be selected from among octree layers 0 to 4 in the decoding process. In this case, the receiver may consider a node size obtainable through the maximum octree depth as a leaf node, and may transmit the node size through signaling information.

Example 2: When LoD0 and LoD1 are selected, layer 5 may be added. Thus, the maximum octree level may be 5, and one scalable layer may be selected from among octree layers 0 to 5 in the decoding process. In this case, the receiver may consider a node size obtainable through the maximum octree depth as a leaf node, and may transmit the node size through signaling information.

According to embodiments, an octree depth, an octree layer, and an octree level may represent units into which data is divided in detail.

Example 3: When LoD0, LoD1, and LoD2 are selected, layers 6 and 7 may be added. Thus, the maximum octree level may be 7, and one scalable layer may be selected from among octree layers 0 to 7 in the decoding process. In this case, the receiver may consider a node size obtainable through the maximum octree depth as a leaf node, and may transmit the node size through signaling information.

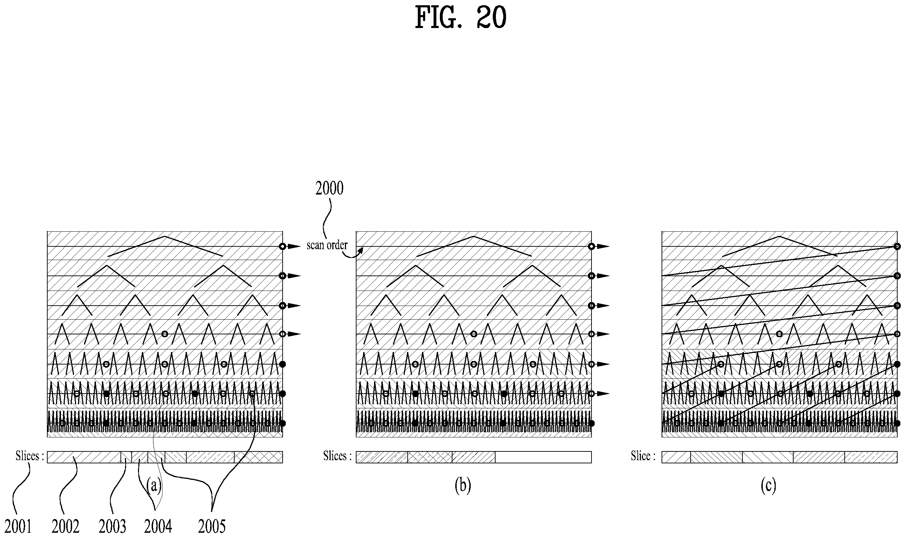

FIG. 20 illustrates a method of configuring a slice including point cloud data according to embodiments.

FIG. 20 illustrates slice configuration according to embodiments

The transmission method/device/encoder according to the embodiments may configure a G-PCC bitstream by segmenting the bitstream in a slice structure. A data unit for detailed data representation may be a slice.

A slice according to embodiments may mean a data unit in which point cloud data is partitioned. That is, a slice represents a portion of the point cloud data.

For example, one or more octree layers may be matched to one slice.

The transmission method/device according to the embodiments, for example, the encoder, may configure a bitstream based on a slice 2001 by scanning a node (point) included in an octree in the direction of scan order 2000.

In FIG. 20-(a), some nodes in an octree layer may be included in one slice.

The octree layers (e.g., level 0 to level 4) may constitute one slice 2002.

Partial data of an octree layer, for example, level 5 may constitute each slice 2003, 2004, 2005.

Partial data of an octree layer, for example, level 6 may constitute each slice.

In FIGS. 20-(b) and 20-(c), when multiple octree layers are matched to one slice, only some nodes (or points) of each layer may be included. In this way, when multiple slices constitute one geometry/attribute frame, information necessary to configure a layer may be delivered for the receiver. The information may include information about layers included in each slice and information about nodes included in each layer.

In FIG. 20-(b), octree layers, for example, level 0 to level 3 and partial data of level 4 may be configured as one slice.

Partial data of octree layers, for example, partial data of level 4 and partial data of level 5, may be configured as one slice.

O Partial data of octree layers, for example, partial data of level 5 and partial data of level 6 may be configured as one slice.

Partial data of an octree layer, for example, level 6, may be configured as one slice.

In FIG. 20-(c), data of octree layers, for example, level 0 to level 4, may be configured as one slice.

Partial data from each of octree layer level 5, level 6, and level 7 may be configured as one slice.

A slice may contain data that corresponds to multiple octree layers. For example, a slice may contain some data from octree layer level 5 and data from octree layer level 6 or octree layer level 7 corresponding to the child nodes of that data.

The encoder and the device corresponding to the encoder according to the embodiments may encode the point cloud data, and generate and transmit a bitstream containing the encoded data and parameter information related to the point cloud data.

In generating the bitstream, the bitstream may be generated based on the bitstream structure according to embodiments (see, for example, FIGS. 16 to 20). Accordingly, the reception device, the decoder, and a corresponding device according to the embodiments may receive and parse a bitstream configured to be suitable for selective partial data decoding, and partially decode and efficiently provide the point cloud data (see FIG. 15).

Scalable transmission according to embodiments

The point cloud data transmission method/device according to the embodiments may scalably transmit a bitstream containing point cloud data, and the point cloud data reception method/device according to the embodiments may scalably receive and decode the bitstream.

When the bitstream according to embodiments shown in FIGS. 16 to 20 is used for scalable transmission, information needed to select a slice required by the receiver may be transmitted to the receiver. Scalable transmission may mean transmitting or decoding only a part of a bitstream, rather than decoding the entire bitstream, and the result thereof may be low resolution point cloud data.

When scalable transmission is applied to the octree-based geometry bitstream, point cloud data should be allowed to be configured with information ranging up to a specific octree layer for the bitstream of each of the octree layers (FIG. 16) from a root node to a leaf node.

To this end, the target octree layer should have no dependency on information about the lower octree layer. This may be a restriction applied to geometry coding and attribute coding in common.

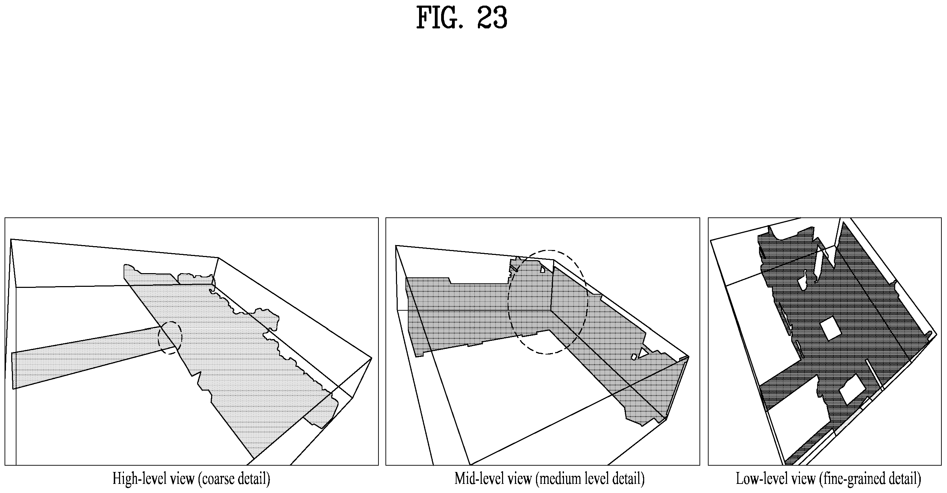

In addition, in scalable transmission, a scalable structure used for the transmitter/receiver to select a scalable layer needs to be delivered. In terms of the octree structure according to the embodiments, all octree layers may support the scalable transmission. However, the scalable transmission may be allowed only for a specific octree layer or lower layers. When a slice includes some of the octree layers, a scalable layer in which the slice is included may be indicated, such that it may be determined whether the slice is necessary/unnecessary in the bitstream stage. In the example of FIG. 20-(a), the yellow part starting from the root node constitutes one scalable layer without supporting scalable transmission, while following octree layers may be matched to scalable layers in a one-to-one correspondence manner. In general, scalability may be supported for a part corresponding to the leaf node. As shown in FIG. 23-(c), when multiple octree layers are included in a slice, it may be defined that one scalable layer shall be configured for the layers.

In this case, scalable transmission and scalable decoding may be used separately for different purposes. The scalable transmission may be used at the transmitting/receiving side for the purpose of selecting information up to a specific layer without involving a decoder. The scalable decoding is used to select a specific layer during coding. That is, the scalable transmission may support selection of necessary information without involving a decoder in a compressed state (in the bitstream stage), such that the information may be determined by the transmitter or receiver. On the other hand, the scalable decoding may support encoding/decoding data only up to a necessary part in the encoding/decoding, and may thus be used in such a case as scalable representation.

In this case, the layer configuration for scalable transmission may be different from the layer configuration for scalable decoding. For example, the three bottom octree layers including the leaf node may constitute one layer in terms of scalable transmission. However, in terms of scalable decoding, when all layer information is included, scalable decoding may be performed for each of leaf node layer, leaf node layer-1, leaf node layer-2.

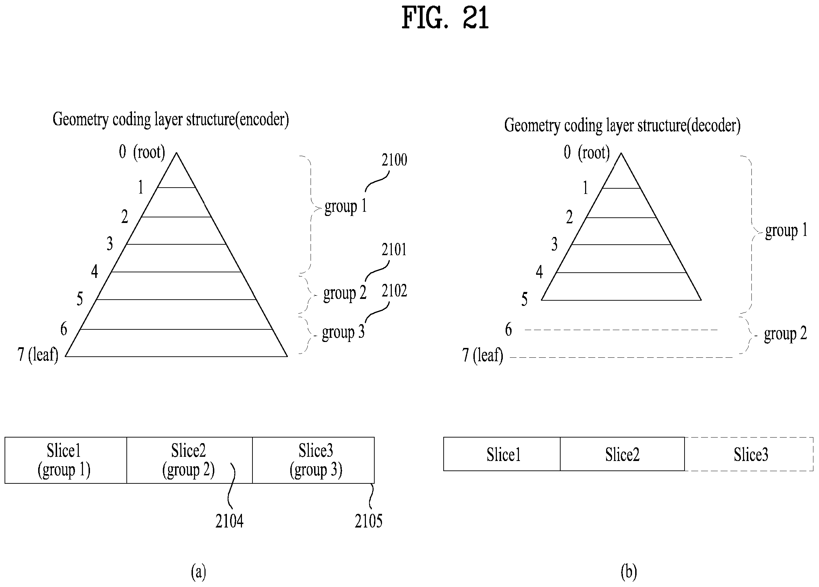

FIG. 21 illustrates a geometry coding layer structure according to embodiments.

When fine granularity slicing is enabled, a G-PCC bitstream according to embodiments may be sliced into multiple sub-bitstreams. To effectively use the layering structure of G-PCC, each slice may include coded data from a partial coding layer or a partial region. With the partitioning of slices paired with the coding layer structure, use cases of scalable transmission or spatial random access may be supported in an efficient manner.

Layer group based slice segmentation

A slice segment may contain data coded from a layer group defined as follows.

A layer group may be defined as a group of contiguous tree layers, wherein the start and end depths of the group of tree layers may be arbitrary numbers in the tree depth, and the start depth may be less than the end depth. The order of the data coded in a slice segment may be the same as the order of the data coded in a single slice.

For example, given a geometry coding layer structure with eight layers, as shown in (a) of FIG. 21, there are three layer groups, each of which is matched to a different slice. Layer group 1 for coding layers 0 to 4, layer group 2 for coding layer 5, and layer group 3 for coding layers 6 and 7. When the first two slices are transmitted or selected, the decoded output will be partial layers 0 to 5, as shown in (b) of FIG. 21. By using slices in the layer group structure, partial decoding of coding layers may be supported without accessing the entire bitstream.

The bitstream and point cloud data according to the embodiments may be generated based on coding layer-based slice segmentation. By slicing the bitstream at the end of the coding layer of the encoding process, the method/device according to the embodiments may select a related slice, thereby supporting scalable transmission or partial decoding.

FIG. 21-(a) shows a geometry coding layer structure with 8 layers in which each slice corresponds to a layer group. Layer group 1 2100 includes coding layers 0 to 4. Layer group 2 2101 includes coding layer 5. Layer group 3 2102 is a group for coding layers 6 and 7. When a geometry (or attribute) has a tree structure having eight levels (depths), a bitstream may be hierarchically configured by grouping data corresponding to one or more levels (depths). Each group may be included in one slice.

FIG. 21-(b) shows the decoded output when selecting two slices from among three groups. When the decoder selects group 1 and group 2, partial layers of levels (depths) 0 to 5 of the tree are selected. That is, partial decoding of coding layers may be supported by using the slices of the layer group structure, even without accessing the entire bitstream.

For the partial decoding process according to the embodiments, the encoder according to the embodiments may generate three slices generated based on the layer group structure. The decoder according to the embodiments may perform partial decoding by selecting two slices from among the three slices.

A bitstream according to embodiments may include layer group-based slices 2104 and 2105. Each slice may include a header containing signaling information related to point cloud data (geometry data and/or attribute data) included in the slice. The reception method/device according to the embodiments may select slices and decode point cloud data contained in the payload of the slices based on the header included in the slices.

The method/device according to the embodiments may further divide the layer group into several subgroups (subgroups) in consideration of use cases of spatial random access in addition to the layer group structure. The subgroups are mutually exclusive, and a set of subgroups may be the same as a layer group. Since the points of each subgroup form a boundary in the spatial domain, the subgroup may be represented by subgroup bounding box information. Based on spatial information, the layer group and subgroup structure may support access to a region of interest (ROI) by selecting slices that cover the ROI.. By efficiently comparing the ROI with the bounding box information about each slice, spatial random access within a frame or tile may be supported.

A method/device according to embodiments may configure slices for delivering point cloud data, as shown in FIG. 21.

The entire coded bitstream may be included in a single slice. For multiple slices, each slice may contain a sub-bitstream. The order of the slices may be the same as the order of the sub-bitstreams. Each slice may be matched to a layer group in a tree structure.

Slices may not affect previous slices, just as higher layers of the geometry tree do not affect lower layers.

The segmented slices according to the embodiments are effective in terms of error robustness, effective transmission, support of region of interest, and the like.

1) Error resilience

Compared to a single slice structure, segmented slices may be more resilient to errors. When a slice contains the entire bitstream of a frame, data loss may affect the entire frame data. On the other hand, when the bitstream is segmented into multiple slices, slices that are not affected by the loss may be decoded even when some other slices are lost.

2) Scalable transmission

Multiple decoders having different capabilities may be supported. When coded data is in a single slice, the LOD of the coded point cloud may be determined prior to encoding. Accordingly, multiple pre-encoded bitstreams having different resolutions of the point cloud data may be independently transmitted, which may be inefficient in terms of large bandwidth or storage space.

When a bitstream is generated and included in segmented slices, the single bitstream may support decoders of different levels. From the decoder perspective, the receiver may select target layers and may deliver the partially selected bitstream to the decoder. Similarly, by using a single PCC bitstream without partitioning the entire bitstream, a partial PCC bitstream may be efficiently generated at the transmitting side.

3) Region based spatial scalability

For region-based spatial scalability, a compressed bitstream may be configured to have one or more layers. A particular ROI may have additional layers and a higher density, and the layers may be predicted from lower layers.

Different detailed representations of a region may be required. For example, in a VRjAR application, distant objects may be represented with low accuracy, and nearby objects may be represented with high accuracy. Alternatively, the decoder may increase the resolution of the ROI at the request. This operation may be implemented using the geometry octree and the scalable structure of G-PCC such as the scalable attribute coding scheme. When decoders access the entire bitstream based on the current slice structure containing the entire geometry or attributes, inefficiency may be caused in terms of bandwidth, memory, and decoder. On the other hand, when the bitstream is segmented into multiple slices, and each slice contains sub-bitstreams according to scalable layers, the decoder according to the embodiments may efficiently select slices as needed.

A method/device according to embodiments may generate a layer group using a tree structure (or layer structure) of the point cloud data.

There are eight layers within a geometry coding layer structure (e.g., an octree structure), and three slices may be used to contain one or more layers. A group represents a group of layers. For example, group 1 includes layers 0 to 4, group 2 includes layer 5, and group 3 includes layers 6 and 7. When scalable attribute coding is used, the tree structure is identical to the geometry tree structure. The same octree-slice mapping may be used to create attribute slice segments.

A layer group according to the embodiments represents a bundle of layer structure units generated in G-PCC coding, such as an octree layer or a LoD layer.

A sub-group may be represented as a set of neighboring nodes within a layer group. It may be configured as a set of neighboring nodes by Morton code order, a set of neighboring nodes based on distance, or a set of neighboring nodes based on coding order. Nodes in a parent-child relationship may also be present within a subgroup.

When subgroups are defined, a boundary occurs in the middle of the layer, and whether there is entropy continuation at the boundary may be signaled by a parameter such as entropy_continuation_enabled_flag. Continuation may also be maintained by referencing the previous slice through ref_slice_id.

The tree structure according to the embodiments may be an octree structure, and the attribute layer structure or attribute coding tree according to the embodiments may include a level of detail (LOD) structure. In other words, the tree structure for the point cloud data may include layers corresponding to depths or levels, and the layers may be grouped.

A method/device according to the embodiments (e.g., the octree analyzer 40002 or LOD generator 40009 of FIG. 4, the octree synthesizer 11001 or LOD generator 11008 of FIG. 11) may generate an octree structure of geometry or an LOD tree structure of attributes. Further, the point cloud data may be grouped based on layers of the tree structure.

Referring to FIG. 21, multiple layers are grouped into a first to third group. A group may be further divided into subgroups within it to form subgroups.

A slice may contain coded data from a layer group. Here, the layer group is defined as a group of consecutive tree layers, wherein the start and end depths of the tree layers may be specific numbers in the tree depth, wherein the start is less than the end.

While FIG. 21 illustrates the geometry coding layer structure as an example of a tree structure, a coding layer structure for attributes may be created similarly.

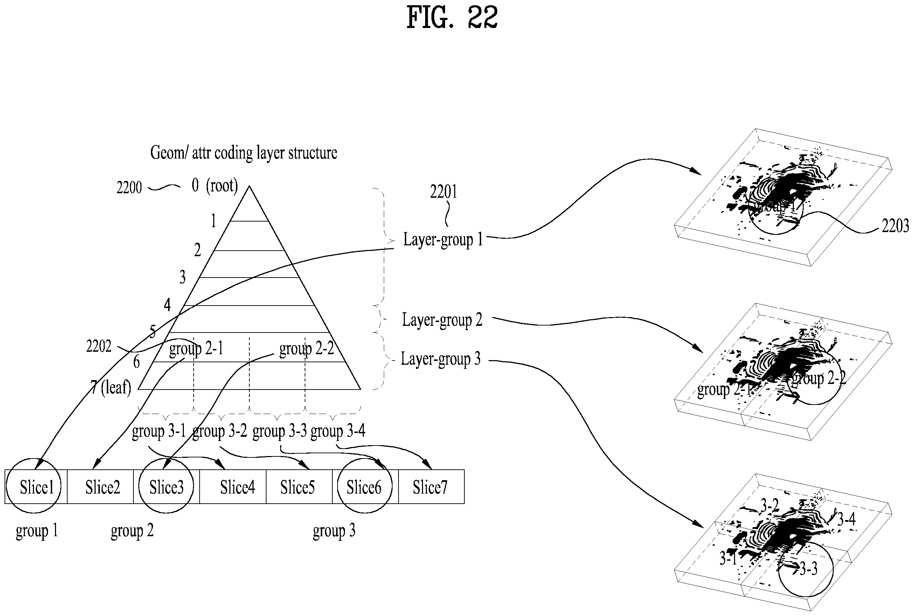

FIG. 22 illustrates a structure of a layer group and subgroups according to embodiments.

Referring to FIG. 22, point cloud data and bitstreams may be bounded and represented by bounding boxes.

In FIG. 22, a subgroup structure and bounding boxes corresponding to the subgroups are shown. Layer groups 2 and 3 are divided into two subgroups (group2-1, group2-2) and four subgroups (group3-1, group3-2, group3-3, group3-4), respectively, and are contained in different slices. Given the slices of the layer groups and subgroups along with the bounding box information, spatial access may be performed by 1) comparing the bounding box of each slice with the ROI, 2) selecting a slice where the subgroup bounding box overlaps with the ROI, and 3) decoding the selected slice.

When an ROI is considered in region 3-3, slices 1, 3, and 6 are selected as subgroup bounding boxes of layer group 1 and subgroups 2-2 and 3-3 that cover the ROI. It is assumed that there is no dependency between subgroups from the same layer group for effective spatial access. For live streaming or low-latency use cases, selection and decoding may be performed as each slice segment is received to increase time efficiency.

A method/device according to embodiments may represent data as a tree 2200 consisting of layers (which may be referred to as depths, levels, etc.) in encoding geometry and/or attributes. Point cloud data corresponding to layers (depths/ levels) may be grouped into layer groups (or groups) 2201. Each layer group may be further divided (segmented) into subgroups 2202. Each subgroup may be configured as a slice to generate a bitstream.

The reception device according to the embodiments may receive the bitstream, select a specific slice, decode a subgroup included in the slice, and decode a bounding box corresponding to the subgroup. For example, when slice 1 is selected, a bounding box 2203 corresponding to layer group 1 may be decoded. Layer group 1 may be data corresponding to the largest region. When displaying an additional detailed region for layer group 1, a method/device according to the embodiments may select slice 3 and/or slice 6, and may hierarchically and partially access the bounding box (point cloud data) of subgroup 2-2 and/or subgroup 3-3 for detailed regions included in the region of layer group 1.

The encoding and decoding of point cloud data by the layer groups and subgroups of FIG. 22 may be performed by the transmission/reception devices of FIG. 1, the encoding and decoding of FIG. 2, the transmission device/method of FIG. 4, the reception device/method of FIG. 11, the transmission/reception devices/methods of FIGS. 12 and 13, the devices of FIG. 14, the encoder and decoder of FIG. 15, the encoder and decoder of FIG. 24, the encoders and decoders of FIGS. 31 to 33, and the transmission/reception methods of FIGS. 34 and 35.

FIG. 23 illustrates a representation of layer group-based point cloud data according to embodiments.

Devices/methods according to embodiments may provide efficient access to large-scale point cloud data or dense point cloud data with layer group slicing based on scalability and spatial access capabilities. Point cloud data may take a significant amount of time to render or display content due to the high number of points and the large size of the data. Therefore, as an alternative approach, the level of detail may be adjusted based on the viewer's interest. For example, when a viewer is far away from a scene or object, structural or global region information is more important than local detailed information, whereas when the viewer moves closer to a specific region or object, detailed information about the ROI is needed. Using an adaptive approach, the renderer according to embodiments may efficiently provide data of sufficient quality to the viewer. FIG. 23 illustrates an example of increasing detail for three levels of viewing distance that changes based on ROI.

The high-level view in FIG. 23 shows coarse detail, the mid-level view shows medium detail, and the low-level view shows fine detail.

FIG. 24 illustrates devices/methods for transmitting and receiving point cloud data according to embodiments.

Multi-resolution ROI may be supported when layer group slicing is used to generate a G-PCC bitstream.

Referring to FIG. 24, multi-resolution ROIs may be supported by the scalability and spatial accessibility of hierarchical slicing. In FIG. 24, the encoder 2400 may generate bitstream slices of spatial subgroups of each layer group or bitstream slices of octree layer groups. Upon request, slices matching the ROI of each resolution are selected and transmitted. The size of the entire bitstream is reduced compared to the tile-based approach, as it does not include details beyond the requested ROI. At the receiving stage, the decoder 2402 may combine the slices to produce three outputs: 1) a high-level view output from layer group slice 1; 2) a mid-level view output from layer group slice 1 and selected subgroups of layer group 2; and 3) a low-level view output of good quality details from selected subgroups of layer groups 2 and 3 and layer group 1. Since the outputs may be generated progressively, the receiver may provide a viewing experience such as zooming in which the resolution progressively increases from the high-level view to the low-level view.

The encoder 2400 may correspond to a geometry encoder and an attribute encoder as a point cloud encoder according to embodiments. The encoder may slice the point cloud data based on layer groups (or groups). A layer may be referred to as a depth of a tree, a level of LOD, or the like. As shown in part 2400-1, the depth of the octree of the geometry and/or the level of the attribute layer may be divided into layer groups (or sub-groups).

The slice selector 2401, in conjunction with the encoder 2400, may select a split slice (or sub-slices) and selectively and partially transmit data such as layer group 1 to layer group 3.

The decoder 2402 may decode the selectively and partially transmitted point cloud data. For example, it may decode a high-level view based on layer group 1 (which has a high depth/layer/level or an index of 0, or is close to root). Thereafter, the mid-level view may be decoded by increasing the index of the depth/level over layer group 1 alone based on layer group 1 and layer group 2. The low-level view may be decoded based on layer group 1 to layer group 3.

Referring to FIG. 24, the encoder 2400 according to the embodiments may receive point cloud data as input and slice the same into layer groups. That is, the point cloud data may be hierarchically structured and divided into layer groups. The hierarchical structure may refer to an octree structure or levels of detail (LoD). Part 2400-1 represents the point cloud data divided into layer groups. The slice selector 2401 may select layer groups (or corresponding slices), and the selected slices are sent to the decoder 2402. The decoder 2402 may reconstruct only layer group 1, reconstruct layer groups 1 and 2, or reconstruct all received layer groups by combining the received slices as desired by the user. The layer groups are hierarchical and have different levels of detail. Reconstructing only layer group 1 may result in a broader range of reconstruction and less detail. Reconstructing all layer groups 1 to 3 may result in a narrower range of reconstruction and more detail.

FIG. 25 illustrates an encoding method according to embodiments.

The encoding of the point cloud data of FIG. 25 may be performed by the transmission device of FIG. 1, the encoding of FIG. 2, the transmission device/method of FIG. 4, the transmission device/method of FIG. 12, the devices of FIG. 14, the encoder of FIG. 15, the encoder of FIG. 24, the encoders of FIGS. 31 to 33, and/or the transmission method of FIG. 34, or any combination thereof.

The encoding method according to the embodiments may include performing encoding with reference to context information based on layer groups and subgroups. The context information may be referred to as context state information, encoder state information, or the like.

The transmission/reception device/method according to the embodiments may divide the point cloud data into layer groups (or subgroups), and may encode and decode the point cloud data based on the layer groups.

According to embodiments, a geometry bitstream may be divided into slices on a per layer-group/subgroup basis, and geometry position information may be efficiently compressed and reconstructed. In order to ensure coding independence between slices, the layer-group slicing according to the embodiments may restrict the use of information about nodes outside the subgroup bounding box. In this case, the continuation of a context reference may be used to reduce the loss of coding efficiency.

Context information used in coding one slice may be used when coding another slice. The context information may be used based on a correlation between nodes present in one geometry tree to enhance coding efficiency. In the case where a local correlation between layer-groups is considered, a context reference relationship may be established when a subgroup bounding box of a reference slice includes or is the same as a subgroup bounding box of a referenced slice.

When slices are in a relationship of a child subgroup with a parent subgroup or a relationship of an ancestor subgroup and a child subgroup, the coding efficiency may be increased by using the context information. In order to reduce the burden on a buffer storing the context information, context information about a first slice may be used for encoding/-decoding of a following slice.

It may be assumed that a node outside a subgroup bounding box is a non-occupied node. That is, when the geometry position information about each node is coded, nodes present in a slice in which each node is included, that is, nodes belonging to the same subgroup may be taken as neighbors. Based on this, neighbor occupancy information about a coding target node may be determined. In this case, for a fast implementation, occupancy information about a neighbor node may be stored in an atlas. In using occupancy information about a node in the atlas, it may be additionally determined whether the node is within the range of the bbox_max and bbox_min of a bounding box of a subgroup to which the current node belongs to selectively use only nodes belonging to the subgroup. This ensures that each subgroup within a layer-group may be coded independently by not allowing neighbor node information belonging to other subgroups to be used in coding a node.

In order to use continuation of context reference information, a layer-group index and a subgroup index of each node are determined, and a reference context according to each index may be used as an initial value of the context information at the start of each subgroup. In the encoding operation, a node may be present regardless of a subgroup order, and the context information may be ensured to be continuously used in a subgroup through a process of storing and loading an encoder context state.

At the time when the depth is changed, the transmission and reception devices according to the embodiments determine whether a layer-group is changed, and perform different operations according to the determination.

The parent-child node relationship between nodes in a tree structure (e.g., an octree or LOD) may be represented as a connection between a node at a lower level and a node at a higher level. In addition, a box area containing a certain number of nodes may represent a layer group or subgroup. The layer group or subgroup may correspond to one or more slices.

In encoding/decoding a layer group, a subgroup, or a slice, the point cloud data transmission/reception device/method according to embodiments may perform encoding/decoding by loading context information based on a reference layer group, a reference subgroup, or a reference slice. That is, the grouped point cloud data may be encoded/decoded based on the context information.

The transmission/reception device/method according to the embodiments may perform arithmetic encoding on the point cloud data belonging to a layer group or subgroup and save the context information, and may load the saved context information to perform arithmetic encoding on the point cloud data belonging to a layer group or subgroup.

In encoding/decoding point cloud data belonging to a layer group, a subgroup, or a slice, the point cloud data transmission/reception device/method according to the embodiments may perform encoding/decoding by loading saved contexts of a reference layer group, a reference subgroup, or a reference slice. Here, the reference layer group, reference subgroup, or reference slice may include nodes corresponding to a parent of nodes belonging to the layer group, subgroup, or slice to be encoded/decoded.

The point cloud data transmission/reception device/method according to embodiments encodes/decodes a second group based on context information about the first group, and saves the context information about the second group. The saved context information about the second group may be used to encode/decode a third group. In this case, the first group to the third group may be groups based on arbitrary layers. Further, the first group may be a group corresponding to a lower layer than the second group. More specifically, the first group may be a group corresponding to a parent of the second group. The nodes belonging to a lower level layer may be nodes that correspond to parents of nodes belonging to a higher level layer.

The point cloud data transmission/reception device/method according to the embodiments may save the context of a parent layer group, a parent subgroup, or a parent slice, and may use the saved contexts in encoding/decoding of a child layer group, a child subgroup, or a child slice. The parent group or slice may be positioned at a lower level than the child group or slice in the tree structure, and a node belonging to the parent group (layer group or subgroup)/slice may have a parent-child relationship with a node belonging to the child group/slice.

The point cloud data transmission device/method according to the embodiments may set or initialize a context, a neighbor search range, or planar buffer information whenever a depth or a level of a tree structure (e.g., octree or LOD) starts, or at a start point of a layer group (or a subgroup or a slice) or an octree depth in which layer groups (or subgroups, slices) are consecutive. The time when the depth (or layer) of the tree structure starts indicates when the leftmost node is reached in the depth (or layer) of the tree structure. When the depth (or level) of the tree structure (octree or LOD structure) changes within the same group (layer group or subgroup, slice), the initialization or setting of the aforementioned information may not be performed.

According to embodiments, in encoding and decoding point cloud data, the current layer group, subgroup, or slice may be encoded/decoded by continuing the context of a reference layer group, a reference subgroup, or a reference slice based on the association between layer groups, subgroups, or slices in encoding and decoding the point cloud data. The point cloud data transmission/reception device/method according to the embodiments improves the compression efficiency of the bitstream by using information related to the reference layer group, reference subgroup, or reference slice.

Applying context continuation may mean continuously using context information (context model, arithmetic model, or probability range information) about a related reference layer group, a related reference subgroup, or a related reference slice in the encoding/decoding operation. In encoding/decoding point cloud data, the point cloud data transmission/reception device/method according to the embodiments may continuously use a context based on a reference group (a reference layer group or a reference subgroup) or a reference slice related to a current group (layer group or subgroup) or slice. Whether continuation of the context is available (whether there is a relation between slices or groups) may be defined through signaling information. According to embodiments, when there is a reference slice or a reference group in encoding/decoding a current slice or group is encoded/decoded, the transmission/reception device/-method may encode/decode the current slice or the current group based on the context information related to the reference slice or the reference group. That is, the current slice or group may be encoded/decoded by applying context continuation.

The context information according to the embodiments may refer to point cloud data, for example, additional information generated in encoding and/or decoding geometry data and/or attribute data by the arithmetic encoder and/or arithmetic decoder of FIGS. 4 and 11. According to embodiments, in encoding/decoding current point cloud data in the encoding and/or decoding according to the embodiments, the current point cloud data may be efficiently compressed and reconstructed based on context information calculated based on previous point cloud data.

Hereinafter, arithmetic encoding will be described.

Arithmetic encoding is one of the entropy encoding algorithms used for lossless compression. Arithmetic encoding may replace the entire message with a single real number n.

Arithmetic coding may divide a range of 0.0 to 1.0 based on the probability of appearance of symbols appearing in the message. For example, suppose that the probability of appearance of symbol "a" in the message is 60%, the probability of appearance of symbol "b" in the message is 20%, and the probability of appearance of symbol "c" in the message is 20%. In the first step, the range of 0.0 to 1.0 is may be divided into a range of 0.0 to 0.6 representing the probability of appearance of symbol "a," a range of 0.6 to 0.8 representing the probability of appearance of symbol "b," and a range of 0.8 to 1.0 representing the probability of appearance of symbol "c." In this case, the ratio at which the probability range such as 0.0 to 1.0 is divided is called a probability model (or probability mode) or a context model.

For example, in applying arithmetic coding to symbol "abc," the first coded symbol is "a," and thus it corresponds to the range of 0.0 to 0.6. In the next step, the range of 0.0 to 0.6 corresponding to "a" is again divided into proportions of 60% 20%, and 20%. Accordingly, the range of 0.0 to 0.6 may be divided into a range of 0.0 to 0.36, a range of 0.36 to 0.48, and a range of 0.48 to 0.6. Next, the second encoded symbol is "b," and thus it corresponds to the range of 0.36 to 0.48. When the range of 0.36 to 0.48 corresponding to "b" is further divided into proportions of 60%, 20%, and 20%, it may be divided into a range of 0.36 to 0.432, a range of 0.432 to 0.456, and a range of 0.456 to 0.48. Next, the third encoded symbol is "c," and thus it corresponds to the range of 0.456 to 0.48. That is, in the arithmetic encoding, a range corresponding to an encoded symbol is divided again according to a probability model or a context model, and then any one of the ranges divided according to the next encoded symbol is selected. By repeating this process, arithmetic encoding is operated.

In the example above, the probability range derived after encoding the message "abc" corresponds to the range of 0.456 to 0.48. Accordingly, the message "abc" may be encoded into a real number within the range. For example, the real number 0.47 may represent "abc." The value of 0.47 is transmitted to the decoder according to the embodiments. The decoder may check the probability range to which the value of 0.47 belongs in the probability range divided according to the context model, and decode the message into a symbol corresponding to the probability range.

The probability model (or probability mode) or context model may be a model that is initially determined according to an arithmetic encoding algorithm, or a model configured by checking the probability of appearance of symbols in performing the encoding/decoding. The probability model or the context model may be updated during the encoding/decoding operation.

The point cloud data transmission/reception device according to the embodiments applies context continuation in performing encoding/decoding, which means continuously encoding the current slice or the current group in continuation with a probability range calculated by arithmetic coding of the reference slice or the reference group. For example, when the last probability range derived in arithmetic encoding of the reference slice is 0.456 to 0.48, the range from 0.456 to 0.48 may be divided again according to the context model or the probability model to continuously encode the current slice. That is, a probability range or a context model may not be initialized for every slice or group (layer group or subgroup). Instead, the current slice may be encoded/decoded in continuation with the probability range of the reference slice derived through relation search.

In encoding/decoding, the point cloud data transmission/reception device/method according to the embodiments may use context-adaptive binary arithmetic coding (CABAC). A context model (or probability mode) used for arithmetic encoding of a slice or a group may be initialized for every slice or group, or a probability mode used in a related reference slice or reference group may be reused in the current slice or the current group.

In addition, the current slice may be encoded continuously in the probability range derived from the related reference slice, or may be decoded using the probability range information. In the case where slices have similar characteristics, inter-symbol redundancy may be utilized by reusing the probability mode. Thereby, the compression efficiency may be increased. Using the same probability mode as the probability mode used in the reference slice has the same meaning as using the context model of the reference slice. Even in arithmetic coding, Huffman coding, or range coding other than CABAC, the probability mode or context model of the reference slice may be reused.

Encoder process

The inputs to the layer group slicing encoder are point cloud data and parameters describing the structure of the layer group slicing. At the beginning of each tree depth, the layer group of the target tree depth may be determined using the layer group structure parameters. Along with the layer group index, the subgroup index of each node may be determined using the subgroup bounding box. When the subgroup for a node is changed, the context states and buffers used by the previous subgroup encoder are saved and the context states and buffers of the current subgroup encoder are loaded. When a separate encoder is used for each subgroup, context states may be continued within the subgroup. Also, to restrict neighbor nodes to be in the same subgroup as the current node, the range of the geometry occupancy atlas may be updated considering subgroup boundaries above the atlas boundary. Both methods ensure that each coded bitstream can be decoded independently, without node information about the neighbor subgroups. This process may be performed recursively for all nodes in all tree depths. When the end of the node at the target tree depth is reached, fine granularity slices (FGS) are generated that are matched one-to-one with subgroups of each layer group. The technique used for independent decoding is described in code below.

Save and load encoder(with layer-group and subgroup determination)

To ensure independent decoding of each subgroup according to embodiments, it is necessary to save and load the encoder state (or context information). This process may be performed for each node of the tree layer to provide flexible subgroup partitioning.

For each tree layer, the layer group of the tree layer is determined and fixed for all tree depths within the layer group. Since a layer group is a set of consecutive tree layers, the layer group index changes at the start of the layer group. With a fixed layer group, subgroups are determined. Since a subgroup is a set of nodes bounded within a subgroup bounding box, the subgroup of a node is found by comparing the position of the node and the subgroup bounding box. Whenever a subgroup or layer group is changed, the encoder state (or context information) of the previous subgroup is saved for future use, and the encoder state (or context information) of the current subgroup is loaded for continuous encoding.

The code is given below.

**[421]**     for (depth = 0; depth < maxDepth; depth++) {

**[422]**     // A transmission/reception method/device according to embodiments may perform the following from depth 0 to the maximum depth of the tree structure.

**[423]**     // determine layer-group index, wherein the layer group index is determined.

**[424]**     if (depth == 0) {

**[425]**     //If depth is 0, this is the start of the tree structure, which means the start of the layer group.

**[426]**     curLayerGroupId = 0;

**[427]** curSubgroupId = 0;

**[428]** //The current layer group index (curLayerGroupId) and the current subgroup index (curSubgroupId) are initialized. The index of the layer group and the index of the subgroup representing the current layer group are initialized.

**[429]** load current context state;

**[430]** //The current context state information is loaded.

**[431]** sum_layers = numLayersPerLayerGroup[curLayerGroupId];

**[432]** }

**[433]** else if (depth == sum_layers) {

**[434]** // If the depth is equal to the sum of the layers (sum_layers), this indicates the point at which the layer group changes.

**[435]** prevLayerGroupId = curLayerGroupId++;

**[436]** // Since the layer group changes, the index value of the current layer group becomes the index value of the previous layer group, and the value of the current layer group index is incremented by 1.

**[437]** prevSubgroupId = curSubgroupId;

**[438]** curSubgroupId = 0;

**[439]** // The current subgroup index becomes the previous subgroup index, and the subgroup index is initialized to 0 in the new layer group.

**[440]** save previous encoder state;

**[441]** load current encoder state;

**[442]** // The context information (encoder state information) of the previous encoder is saved, and the context information (encoder state information) of the current encoder is loaded.

**[443]** sum_layers += numLayersPerLayerGroup[curLayerGroupId];

**[444]** }

**[445]** else if (numSubgroupsMinus1[curLayerGroupId] > 0) {

**[446]** // Represents the case where the octree depth is increased without the layer-group being changed.

**[447]** prevSubgroupId = curSubgroupId;

**[448]** curSubgroupId = 0;

**[449]** // The layer-group index is retained, the current subgroup index becomes the previous subgroup index, and the current subgroup index (curSubgroupId) is initialized to 0. The subgroup changes as the depth changes.)

**[450]** // If subgroups are used, an initialization is required.

**[451]** save previous encoder state;

**[452]** reload current encoder state;

**[453]** // The previous encoder context state is saved.

**[454]**    // The current encoder context state is loaded.  It may be initialized to a reference context based on the layer-group index and subgroup index).

**[455]**    }

**[456]**    for (all nodes in curLayerGroupId) {

**[457]**    // The subgroup index is determined for all nodes in the current layer group.

**[458]**    if (!(nodePos >= bbox_min && nodePos < bbox_max)) {

**[459]**    for (i = 0; i<=numSubgroupsMinus1[curLayerGroupId]; i++) {

**[460]**    // The loop is executed i times equal to the number of subgroups in the layer group.

**[461]**    if (nodePos >= bbox_min[i] && nodePos < bbox_max[i ]){

**[462]**    // If the position of the node is above the minimum boundary value of the subgroup and below the maximum boundary value of the subgroup, it indicates that the node is included in that subgroup.

**[463]**    prevSubgroupId = curSubgroupId;

**[464]**    curSubgroupId = i;

**[465]**    // The current subgroup index becomes the previous subgroup index, and the current subgroup index is set to i.

**[466]**    save previous encoder state;

**[467]**    // save and load encoder state, wherein previous encoder context information is saved.

**[468]**    if (first node of the current subgroup)

**[469]**    load reference encoder state;

**[470]**    // If it is the first node in the current subgroup, the reference encoder state (or reference context information) is loaded.

**[471]**    else

**[472]**    reload current encoder state;

**[473]**    // If it is not the first node in the current subgroup, the current encoder state (or current context information) is reloaded.

**[474]**    break;

**[475]**    } } } }

**[476]**    }

Depending on the content of the code, the transmission/reception device/method according to the embodiments may encode or decode the point cloud data by referencing context states (or context information) between subgroups or between layer groups. In this case, the transmission/reception device/method according to the embodiments may determine whether the node corresponds to a subgroup by comparing information indicative of the position of the node with the bounding box information related to the subgroup. Then, context information may be referenced based on whether the node belongs to the subgroup.

The transmission/reception device/method according to embodiments may update the geometry occupancy atlas.

To take into account subgroup boundaries in the geometry occupancy atlas, _maxRange and _minRange may be defined in the MortonMap3D class. If the atlas is in a subgroup, the _maxRange and _minRange may be set to 0 and the edge length of the cube, respectively. If the minimum boundary of the subgroup is greater than the minimum value of the atlas, _minRange may be set to the minimum value of the subgroup boundary. If the maximum boundary of the subgroup is less than the maximum value of the atlas, _maxRange may be set to the maximum value of the subgroup boundary. These ranges may be used to activate a portion of the atlas that overlaps with the subgroup boundary box, and nodes in the active region may be used as neighbors. This ensures that the fine-granularity slice (FGS) can be decoded without nodes from neighbor subgroups.

```
class MortonMap3D {
setRange( ) {
for (m = 0; m < 3; m++) {
// _maxRange
if (bboxMax < atlasOrigin + _cubeSize)
_maxRange[m] = bboxMax - atlasOrigin;
else
_maxRange[m] = _cubeSize;
// _minRange
if (bboxMin > atlasOrigin)
_minRange[m] = bboxMin - atlasOrigin;
else
 _minRange[m] = 0;
} }
}
```

Referring to FIG. 25, a transmission device/method according to embodiments may perform operations including determining a layer group (S2501), determining a subgroup belonging to the layer group (S2502), determining whether the subgroup has changed (S2503). When the subgroup has changed, it may save and load context state information (S2504). Then, it updates the geometry occupancy atlas (S2505). In the case where the subgroup has not changed, the geometry occupancy atlas may be updated immediately (S2505).

The determining the layer group (S2501), determining the subgroup (S2502), determining whether the subgroup has changed (S2503), and updating the atlas (S2505) may be performed according to the code described above.

The transmission/reception device/method according to the embodiments may determine the subgroup to which a node belongs by comparing information indicative of the position of the node with the bounding box information (minimum and maximum values) of the subgroup. Accordingly, the node may be encoded or decoded by loading context information based on the subgroup and layer group to which the node belongs, and the node may be encoded or decoded by referencing the saved context information related to another subgroup or layer group.

The node may be encoded (S2506), and it may be determined whether the node is the last in the subgroup (S2507). Based on the result of the determination, the process may be repeated for all nodes (or points) corresponding to the layer group or subgroup. Once all nodes at a given depth in the tree structure are encoded, it may be determined whether the depth is the last in the tree structure (S2508) and the process may be repeated for the next depth based on the result of the determination.

A data unit header may be generated to generate signaling information about the reference relationship of the context information, and the reception device/method according to the embodiments may decode the point cloud data based on the signaling information.

FIG. 26 illustrates a decoding method according to embodiments.

The decoding of the layer group and subgroup based point cloud data in FIG. 26 may be performed by the reception device of FIG. 1, the decoding of FIG. 2, the reception device/method of FIG. 11, the reception device/method of FIG. 13, the devices of FIG. 14, the decoder of FIG. 15, the decoder of FIG. 24, the decoder of FIGS. 31 to 33, the transmission and reception methods of FIG. 35, or any combination thereof.

Geometry decoder process

The decoding process of the layer group slicing reference SW for the first fine granularity slice (FGS) includes parsing a parameter set, parsing a data unit header and decoding a data unit. When the layer group slicing is enabled, following dependent geometry data units may be considered as the FGSs for the first slice if they have the same slice ID. Taking into account node inheritance and context references between parent and child subgroups, the order of FGSs is assumed to be sorted in ascending order by layer_group_id and subgroup_id.

Prior to decoding the dependent data units, the context state, output nodes, and layer group parameters of the previous slice are saved in a buffer for the next slice. In the decoding according to the embodiments, after parsing the dependent data unit header, the parent of the current subgroup may be detected by finding a subgroup whose subgroup boundary box is a superset of the current subgroup boundary box. Once the parent subgroup is determined, the parent nodes of the current dependent data unit are selected. By using the selected nodes as the initial nodes for the decoding process, the current dependent data unit is decoded up to the tree layer covered by the current layer group. The decoding process of the dependent data units is performed recursively until the end of the geometry bitstream.

The dependent data unit according to the embodiments may correspond to a node, subgroup, or layer group.

Hereinafter, a process for finding a parent subgroup and a parent node is described.

Parent subgroup detection

In decoding FGSs, the nodes of the parent subgroup may be used as input to the child subgroups in order to provide continuous decoding within the layer group boundaries. This is due to the hierarchical structure of layer group slicing, and may be triggered based on a parent-child spatial relationship. A child subgroup is a subset of a parent subgroup, and the bounding box of the child subgroup is spatially exclusive from the bounding boxes of other child subgroups in the same layer group.

Based on this relationship, a slice of a parent subgroup may be detected by finding a spatial superset of the current slice. The parent subgroup may be found by comparing the bounding box information about the subgroup at the previous layer group level with subgroup_bbox_origin and subgroup_bbox_size signaled in the data unit header.

The following is code to search for the parent subgroup.

```
[511]    parentLayerGroup = curLayerGroup − 1;
[512]    // The index value of the current layer group minus 1 becomes the index
of the parent layer group.
[513]    for (i = 0; i < numSubgroups[parentLayerGroup]; i++) {
[514]    // The loop is executed as many times as the number of subgroups
belonging to the parent layer group.
[515]    if (_bboxMin[parentLayerGroup][i] <= curBboxMin
[516]    && _bboxMax[parentLayerGroup][i] > curBboxMin) {
[517]    // The minimum and maximum values of the current bounding box are
compared with the minimum and maximum values of the bounding box of the
subgroup belonging to the parent layer group.
[518]    parentSubgroup = i;
[519]    // If the bounding box of the current subgroup falls within the bounding
```

According to the code above, in order to detect the parent subgroup of the current subgroup, the reception device/method according to the embodiments may compare the boundary box information about the current subgroup with the boundary box information about other subgroups. Thereby, it may detect which of the other subgroups is the parent subgroup of the current subgroup. Then, to decode the current subgroup, the context information about the parent subgroup may be referenced. Thereby, efficient decoding may be performed.

Also, for efficient decoding, the starting point for searching for the parent subgroup index may be specified as the previous parent subgroup. This is based on the assumption that slices are ordered in the direction of increasing layer-group and subgroup, and slice reordering may be added if necessary.

The following is code to search for the parent subgroup.

```
[526]    parentLayerGroup = curLayerGroup - 1;
[527]    if (beginning of the layer-group)
[528]    start = _prevParentSubgroupStart;
[529]    else
[530]    start = _prevParentSubgroup; // If it is not the starting point of a layer
group, the search starts with the previous parent subgroup.
[531]    for (i = start; i < numSubgroups[parentLayerGroup]; i++) {
[532]    if (_bboxMin[parentLayerGroup][i] <= curBboxMin
[533]    && _bboxMax[parentLayerGroup][i] > curBboxMin) {
[534]    parentSubgroup = i;
[535]    break;
[536]    }
[537]    }
[538]    _prevParentSubgroup = parentSubgroup;
[539]    Input parent node selection
```

Input parent node selection

In decoding dependent slices, the output nodes of the parent subgroup may be used as input to decode the child subgroup. When the subgroup bounding boxes of the parent subgroup and the child subgroup are the same, all nodes generated by the parent subgroup are used. On the other hand, when the subgroup bounding box of the child subgroup is a subset of the parent subgroup, the decoder according to the embodiments needs to select actual parent nodes. To find the parent nodes, each node of the parent subgroup may be compared with the boundary bounding box of the child subgroup.

The following is code to search for parent nodes.

```
for (node = inNodes.begin(); node != inNodes.end(); node++) {
if (node.Pos >= bbox_min && node.Pos < bbox_max)
fifo.emplace_back(node);
else
continue;
}
```

To improve the efficiency of parent node selection, the selection status of each node may be used. This is based on the condition that a parent node can be included in only one subgroup.

Also, when the parent subgroup bounding box is the same as the current subgroup bounding box (in origin and size), all nodes in the parent subgroup may be parent nodes of the current subgroup. In this case, the parent node selection process may be omitted to increase decoder efficiency.

```
for (node = inNodes.begin(); node != inNodes.end(); node++) {
if ( node.IsSelectedFlag == false &&
(node.Pos >= bbox_min && node.Pos < bbox_max)) {
fifo.emplace_back(node);
node.IsSelectedFlag = true;
}
else
continue;
}
```

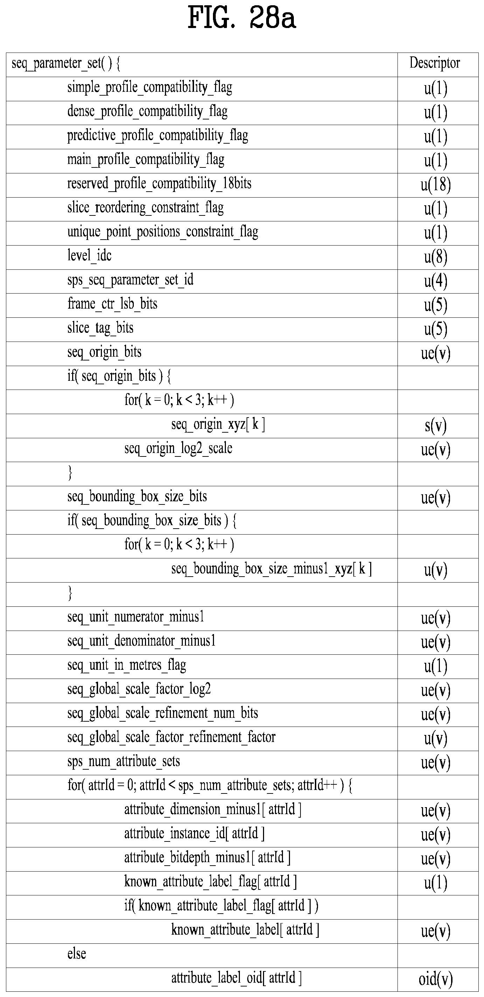

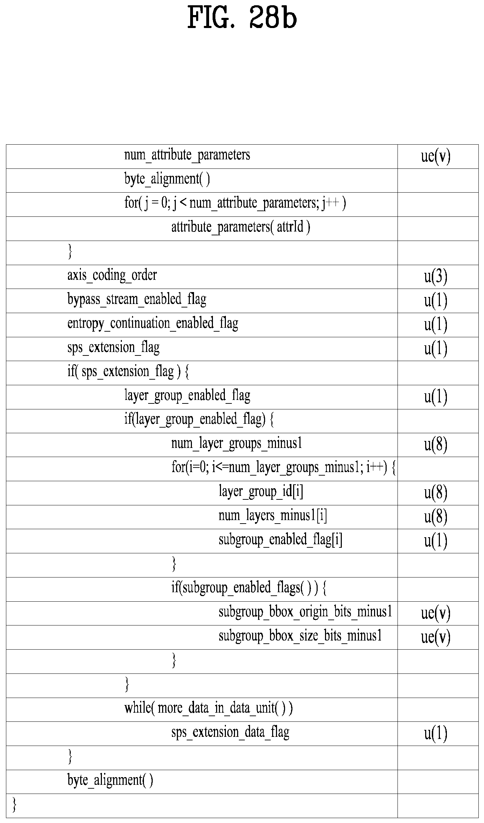

Referring to FIG. 26, the reception device/method according to the embodiments includes parsing a data unit header and parsing a data unit. The data unit may include point cloud data according to embodiments, and the data unit header may include parameter information needed to decode the point cloud data. The parameter information may be the information disclosed in FIGS. 28 to 30. The data unit may correspond to a slice that is matchable to a layer group or subgroup.

Referring to FIG. 26, the reception device/method according to the embodiments may determine whether layer-group slicing is enabled (S2601), and may operate differently in response to the result of the determination. When layer-group slicing is performed, layer-group parameters and buffers may be updated (S2602) and the dependent data unit header may be parsed (S2603). The reception device/method according to the embodiments may then detect a parent subgroup (S2604) and select a parent node input (S2605) to decode the point cloud data. Then, it may parse the dependent data unit (S2606), determine whether the end of the bitstream is reached (S2607), and generate a point cloud output (S2608).

The detecting the parent subgroup (S2604) and selecting the parent node input (S2605) described with reference to FIG. 26 may be performed by the code described above.

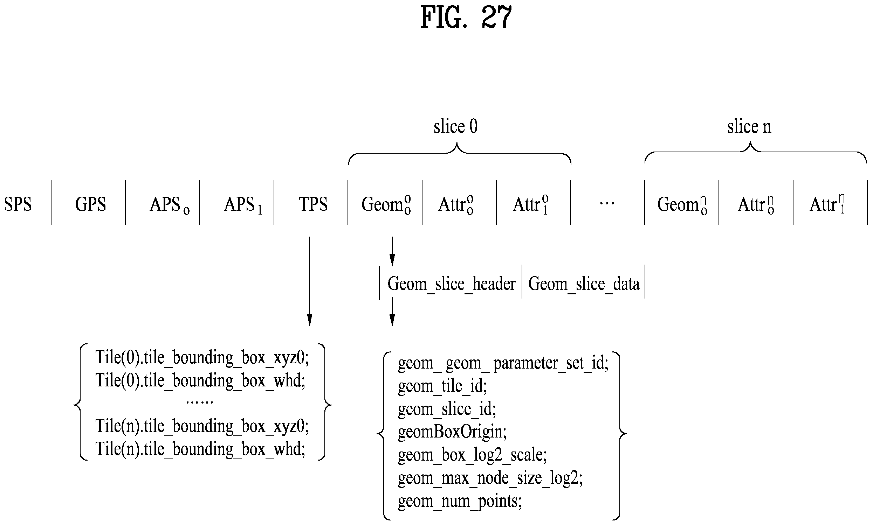

FIG. 27 illustrates a bitstream configuration according to embodiments.

The method/device according to the embodiments may generate a bitstream as shown in FIG. 27. The bitstream may contain encoded geometry data and attribute data, and also contain parameter information.

The parameter information may include a slice structure for the layer configuration described with reference to FIGS. 15 to 26 and signaling information for scalable transmission.

Syntax and semantics for the parameter information are described below.

According to embodiments, information on a separated slice may be defined in a parameter set of the bitstream and an SEI message as follows.

The bitstream may contain a sequence parameter set (SPS), a geometry parameter set (GPS), an attribute parameter set (APS), a geometry slice header, and an attribute slice header. The geometry slice header may be referred to as a geometry data unit header, and the attribute slice header may be referred to as an attribute data unit header. That is, the slice may be referred to as a data unit.

The parameter information may have a different meaning depending on the position where the signal is transmitted. When the signal is defined in the SPS, this may indicate that the signal is equally applied to the entire sequence. When the signal is defined in the GPS, this may indicate that the signal is used for position reconstruction. When the signal is defined in the APS, this may indicate that the signal is applied to attribute reconstruction. When the signal is defined in the TPS, this may indicate that the signal is applied only to the points in a tile. When the signal is delivered in a slice, this may indicate that the signal is applied only to the slice. In addition, depending on the application or system, the range and method to be applied may be defined in a corresponding position or a separate position so as to be used differently. In addition, when the syntax elements defined below are applicable to multiple point cloud data streams as well as the current point cloud data stream, they may be carried in a superordinate parameter set.

The abbreviations mean the following.

SPS: Sequence Parameter Set, GPS: Geometry Parameter Set, APS: Attribute Parameter Set, TPS: Tile Parameter Set, Geom: Geometry bitstream = geometry slice header+ geometry slice data, Attr: Attrobite bitstream = attribute slice header + attribute slice data.

While the embodiments define the information independently of the coding technique, the information may be defined in connection with the coding technique. In order to support locally different scalability, the information may be defined in the tile parameter set in the bitstream. In addition, when syntax elements defined below are applicable not only to the current point cloud data stream but also to multiple point cloud data streams, they may be carried in a superordinate parameter set or the like.

Alternatively, a network abstract layer (NAL) unit may be defined for a bitstream and relevant information for selecting a layer, such as layer_id, may be delivered. Thereby, a bitstream may be selected at a system level.

Hereinafter, parameters (which may be referred to as metadata, signaling information, or the like) according to the embodiments may be generated in the process of the transmitter according to the embodiments, and transmitted to the receiver according to the embodiments so as to be used in the reconstruction of the point cloud data.

For example, the parameters may be generated by a metadata processor (or metadata generator) of the transmission device according to the embodiments, which will be described later, and may be acquired by a metadata parser of the reception device according to the embodiments.

Parameters describing the layer group structure may be signaled at different levels. Common structure information is described in the SPS, and the details of each layer group or subgroup may be signaled in the slice header. In addition, a layer group structure inventory and a dependent slice header are introduced to describe the overall layer group structure.

The definition of a slice and a method for signaling slices are described below.

1) Definition of a slice

A. Slice: Represents a set of points coded with one independent fine-granularity slice and zero or more dependent fine-granularity slices.

B. Dependent fine-granularity slice: Represents a data unit in a slice that depends on previous data units within the same slice.

C. Independent fine-granularity slice: Represents the first (geometry) data unit in the slice.

2) Fine-granularity slices are enabled in the SPS.

3) The required information for decoding the dependent fine-granularity slice, including context inheritance (or reference) and slice-specific bounding boxes, may be carried by the dependent data unit header.

4) A layer group structure inventory may be defined to describe the relationships between the fine-granularity slices.

A fine-granularity slice according to embodiments may be matched with a layer group or subgroup according to embodiments.

Hereinafter, syntax/semantics of parameters contained in the bitstream will be described with reference to FIGS. 28 to 30.

FIGS. 28A and 28B show syntax of a sequence parameter set according to embodiments

The syntax of FIGS. 28A and 28B may be contained in the bitstream of FIG. 27, generated by an encoder according to embodiments, and decoded by a decoder.

Semantics of sequence parameter set

The main_profile_compatibility_flag field may indicate whether the bitstream conforms to the main profile. For example, main_profile_compatibility_flag equal to 1 may indicate that the bitstream conforms to the main profile. For example, main_profile_compatibility_flag equal to 0 may indicate that the bitstream conforms to a profile other than the main profile.

When unique_point_positions_constraint_flag is equal to 1, all output points may have unique positions in each point cloud frame that is referred to by the current SPS. When unique_point_positions_constraint_flag is equal to 0, two or more output points may have the same position in any point cloud frame that is referred to by the current SPS. For example, even when all points are unique in the respective slices, slices in a frame and other points may overlap. In this case, unique_point_positions_constraint_flag is set to 0.

level_idc indicates a level to which the bitstream conforms.

sps_seq_parameter_set_id provides an identifier for the SPS for reference by other syntax elements.

sps_num_attribute_sets indicates the number of coded attributes in the bitstream.

The SPS according to the embodiments includes an iteration statement repeated as many times as the value of the sps_num_attribute_sets field. In an embodiment, i is initialized to 0, and is incremented by 1 each time the iteration statement is executed. The iteration statement is repeated until the value of i becomes equal to the value of the sps_num attribute sets field. The iteration statement may include an attribute_dimension_minusi[i] field and an attribute_instance_id[i] field. attribute_dimension-_minusi[i] plus 1 indicates the number of components of the i-th attribute.

The attribute_instance_id[i] field specifies the instance ID of the i-th attribute.

The known attribute_label flag[i] field indicates whether a know_attribute_label[i] field or an attribute_label_four_bytes[i] field is signaled for the i-th attribute. For example, known attribute_label flag[i] equal to 0 indicates the known attribute_label[i] field is signaled for the i-th attribute. known_attribute_label_flag[i] equal to 1 indicates that the attribute_label four_bytes[i] field is signaled for the i-th attribute.

known attribute_label[i] specifies the type of the i-th attribute. For example, known attribute_label[i] equal to 0 may specify that the i-th attribute is color. known attribute_label[i] equal to 1 may specify that the i-th attribute is reflectance. known attribute_label[i] equal to 2 may specify that the i-th attribute is frame index. Also, known_attribute_label[i] equal to 4 specifies that the i-th attribute is transparency. known_attribute_label[i] equal to 5 specifies that the i-th attribute is normals.

axis_coding_order specifies the correspondence between the X, Y, and Z output axis labels and the three position components in the reconstructed point cloud RecPic [pointidx] [axis] with axis=0..2.

bypass_stream_enabled_flag equal to 1 specifies that the bypass coding mode may be used in reading the bitstream. As another example, bypass_stream_enabled_flag equal to 0 specifies that the bypass coding mode is not used in reading the bitstream.

sps_extension_flag indicates whether the sps_extension_data syntax structure is present in the SPS syntax structure. For example, sps_extension_present_flag equal to 1 indicates that the sps_extension_data syntax structure is present in the SPS syntax structure. sps extension_present flag equal to 0 indicates that this syntax structure is not present. When sps_extension_flag is equal to 1, the SPS according to the embodiments may further include an sps_extension_data_flag field. The sps_extension_data_flag field may have any value.

layer_group_enabled_flag equal to 1 specifies that the geometry bitstream of a slice is contained in multiple slices which is matched to a coding layer group or a subgroup thereof. layer_group enabled flag equal to 0 specifies that the geometry bitstream of a slice is contained in a single slice.

num_layer_groups_minus1 plus 1 specifies the number of layer-groups that represent groups of consecutive tree layers that are part of the geometry coding tree structure. num_layer_groups_minus1 shall be in the range of 0 to number of coding tree layers.

layer_group_id specifies the identifier of a layer-group of a slice. layer_group_id is in the range of 0 to num_layer_groups_minus1.

num_layers_minus1 plus 1 specifies the number of coding layers included in the i-th layer-group. The total number of layer-groups may be derived by adding all (num_layers_minus1[i] + 1) for i from 0 to num_layer_groups_minus1.

subgroup_enabled_flag equal to 1 indicates that the i-th layer group is divided into two or more subgroups. In this case, the set of points in the subgroups is the same as the set of points in the layer group. When subgroup_enabled_flag of the i-th layer group is equal to 1, and j is greater than or equal to i, subgroup_enabled_flag of the j-th layer group will be equal to 1. subgroup_enabled_flag equal to 0 indicates that the current layer group is contained in a single slice without being divided into multiple subgroups.

subgroup_bbox origin_bits_minus1 plus 1 indicates the length in bits of the syntax element subgroup_bbox_origin.

subgroup_bbox_size_bits_minus1 plus 1 indicates the length in bits of the syntax element subgroup_bbox_size.

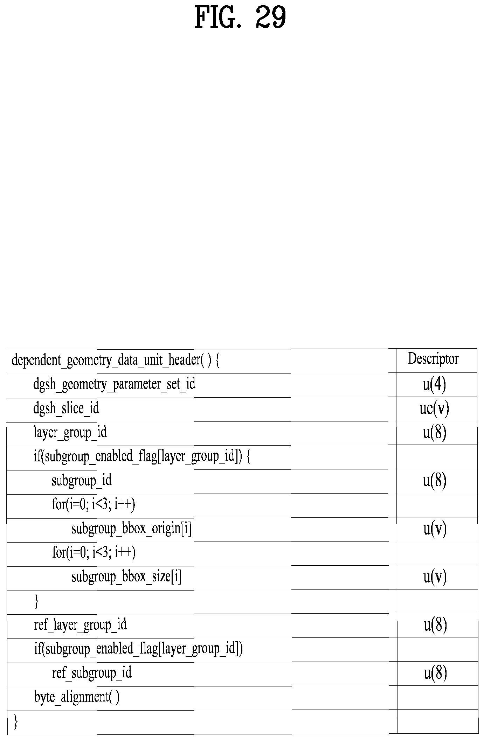

FIG. 29 shows syntax of a dependent geometry data unit header according to embodiments.

The syntax of FIG. 29 may be included in the bitstream of FIG. 27, generated by an encoder according to embodiments, and decoded by a decoder.

Semantics of dependent geometry data unit header

dgdu_geometry_parameter set_id indicates the active GPS indicated by gps_geom_parameter_set_id. The value of dgdu_geometry_parameter_set_id shall be equal to the value of gdu_geometry_parameter set_id for the corresponding slice.

dgdu_slice_id indicates the slice to which the current dependent geometry data unit belongs.

layer_group_id indicates the layer group identifier of the slice. layer_group_id is in the range of 0 to num_layer_groups_minus1. When not present, layer_group_id is inferred to be 0.

subgroup_id indicates the subgroup identifier of the layer group referenced by layer_group_id. subgroup_id is in the range of 0 to num_subgroups_minus1[layer_group_id]. subgroup_id indicates the order of slices in the same layer_group_id. When not present, subgroup_id may be inferred to be 0.

subgroup_bbox_origin indicates the position of the origin of the subgroup bounding box for the i-th subgroup, indicated by subgroup_id, of the j-th layer group, indicated by layer_group_id.

subgroup_bbox_size indicates the size of the subgroup bounding box of the i-th subgroup, indicated by subgroup_id of the j-th layer group, indicated by layer_group_id.

The bounding box of points within a subgroup are described by subgroup_bbox_origin and subgroup_bbox_size. When i and j are not equal, the bounding box region of the i-th subgroup does not overlap with the bounding box of the j-th subgroup.

ref layer_group_id indicates the layer group identifier for the context reference of the current dependent data unit. ref_layer_group_id is in the range of 0 to layer_group_id of the current dependent data unit. A dependent data unit may correspond to a layer group or subgroup.

ref_subgroup_id indicates the identifier of the reference subgroup of the layer group indicated by ref layer_group_id. ref_subgroup_id is in the range of 0 to num_subgroup_id_minus1 of the layer group indicated by ref_layer_group_id.

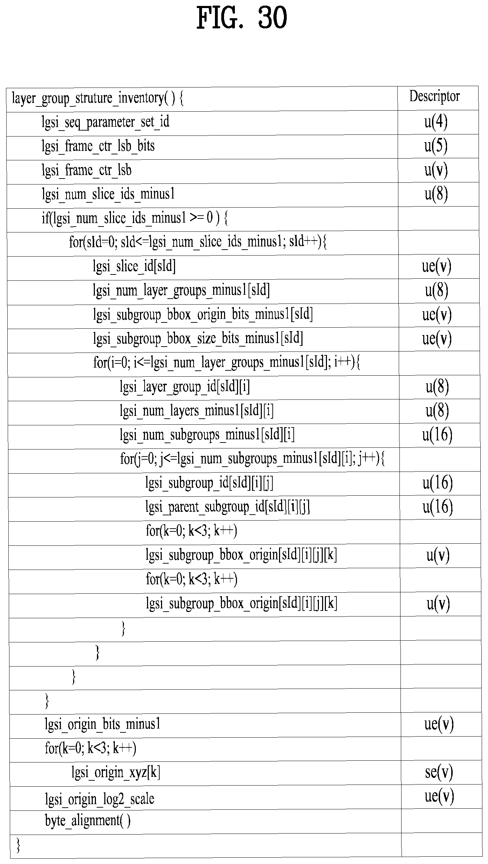

FIG. 30 shows syntax of a layer group structure inventory according to embodiments.

The syntax of FIG. 30 may be included in the bitstream of FIG. 27, generated by an encoder according to embodiments, and decoded by a decoder.

Syntax of layer group structure inventory

lgsi_seq_parameter_set_id indicates the value of sps_seq_parameter_set_id. It is the requirement of bitstream conformance that lgsi_seq_parameter_set_id is equal to 0.

lgsi_frame_ctr_lsb_bits specifies the length in bits of the syntax element lgsi_frame_ctr_lsb.

lgsi_frame_ctr_lsb specifies the least significant bits of lgsi_frame_ctr_lsb_bits of FrameCtr for which the group structure inventory is valid. The layer-group structure inventory is kept valid until it is replaced with another layer-group structure inventory.

lgsi_num_slice_ids_minus1 plus 1 may indicate the number of slices in the layer-group structure inventory.

gi slice_id specifies the slice ID of the sid-th slice within the layer-group structure inventory. It is a requirement of bitstream conformance that all values of lgsi_slice_id are unique within the layer-group structure inventory.

lgsi_num_layer_groups_minus1 + 1 indicates the number of layer groups.

lasi_subgroup_bbox_origin_bits_minus1 plus 1 indicates the length in bits of the syntax element lgsi_subgroup_bbox_origin.

lgsi_subgroup_bbox_size_bits_minus1 plus 1 indicates the length in bits of the syntax element lgsi_subgroup_bbox_size.

lgsi_layer_group_id specifies the identifier of a layer.

lgsi_num_layers_minus1 plus 1 indicates the number of coded layers in the slices of the i-th layer-group in the sid-th slice. The total number of coded layers required to decode the n-th layer-group is equal to the sum of lgsi_num_layers_minus1[sid][i] + 1 for i from 0 to n.

lgsi_num_subgroups_minus1 plus 1 specifies the number of subgroups in the i-th layer-group in the sid-th slice.

lgsi_subgroup_id indicates the identifier of a subgroup. lgsi_subgroup_id is in the range of 0 to lgsi_num_subgroups_minus1.

lgsi_parent_subgroup_id indicates the identifier of the parent subgroup of the subgroup indicated by lgsi_subgroup_id. lgsi_parent_subgroup_id is in the range of 0 to gi_num_subgroups_minus1 in the layer group indicated by lgsi_subgroup_id.

lgsi_subgroup_bbox_origin indicates the origin of the subgroup bounding box of the subgroup indicated by lgsi_subgroup_id of the layer group indicated by lgsi_layer_group_id.

lgsi_subgroup_bbox_size indicates the size of the subgroup bounding box of the subgroup indicated by lgsi_subgroup_id of the layer group indicated by lgsi_layer_group_id.

lgsi_origin_bits_minus plus 1 indicates the length in bits of the shintax element lgsi_origin_xyz.

lgsi_origin_xyz indicates the origin of all partitions. The value of lgsi origin_>cyz[k] may be equal to sps_bounding_box_offset[ k ].

lgsi origin_log2 scale indicates the scaling factor for scaling the components of lgsi origin_>cyz. The value of lgsi origin_log2_scale shall be equal to sps_bounding_box offset_log2 scale.

FIG. 31 illustrates a point cloud data transmission/reception device/method, according to embodiments.

The point cloud data transmission device/method according to the embodiments, such as the transmission device 10000, point cloud video encoder 10002, and transmitter 10003 in FIG. 1, the acquisition 20000/encoding 20001/transmission 20002 in FIG. 2, the encoder in FIG. 4, the transmission device in FIG. 12, the device in FIG. 14, the encoder in FIG. 15, or the reception device 10004, receiver 10005, and point cloud video decoder 10006 in FIG. 1, the transmission 20002/decoding 20003/rendering 20004 in FIG. 2, the decoder in FIGS. 10 and 11, the reception device in FIG. 13, the device in FIG. 14, and the decoder in FIG. 15, may encode or decode point cloud data in a layer structure. Each of the components in FIG. 31 may correspond to hardware, software, processors, and/or a combination thereof.

The point cloud data transmission/reception device/method according to the embodiments may transmit and receive point cloud data in a PCC-based service by adjusting the compression rate or the number of data depending on the performance of the receiver or the transmission environment. In the case where the receiver performance or transmission environment changes while the point cloud data is bundled in a single slice, the bitstreams for each environment may be pre-transcoded and stored separately for selection at the time of transmission, or may be transcoded before transmission. However, in the case where the environment of the receiver increases or the transmission environment changes frequently, delays may occur due to storage space issues or transcoding.

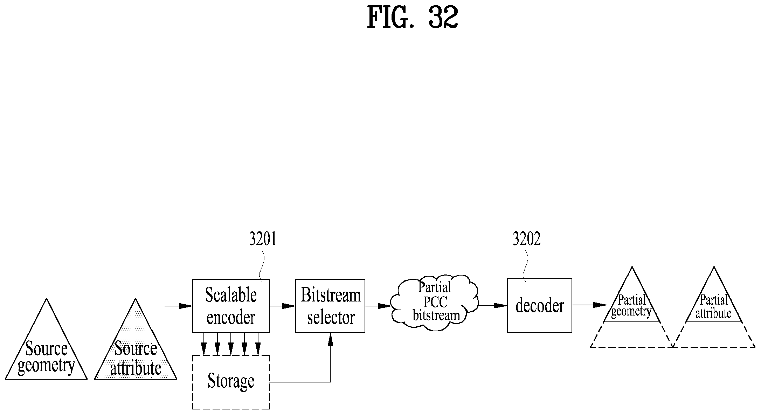

FIG. 32 illustrates a point cloud data transmission/reception device/method according to embodiments.

The point cloud data transmission device/method according to the embodiments, such as the transmission device 10000, the point cloud video encoder 10002, and the transmitter 10003 in FIG. 1, the acquisition 20000-encoding 20001-transmission 20002 in FIG. 2, the encoder in FIG. 4, the transmission device in FIG. 12, the device in FIG. 14, the encoder in FIG. 15, or the reception device 10004, receiver 10005, and point cloud video decoder 10006 in FIG. 1, the transmission 20002-decoding 20003-renderign 20004 in FIG. 2, the decoder in FIGS. 10 and 11, the reception device in FIG. 13, the device in FIG. 14, and the decoder in FIG. 15, may encode or decode point cloud data in a layer structure. Each of the components in FIG. 32 may correspond to hardware, software, processors, and/or a combination thereof.

Dividing and delivering the compressed data according to the layers according to embodiments allows only the necessary parts of the pre-compressed data to be selectively delivered in the bitstream stage without a separate transcoding operation. This is efficient in terms of storage space because only one storage space is needed per stream. It is also efficient in terms of (bitstream selector) bandwidth because only the necessary layers are selected before transmission.

Referring to FIG. 32, the encoder 3201 according to the embodiments may select the necessary parts in the bitstream (bitstream selector). Further, the selected bitstream may be transmitted to the decoder 3202 according to the embodiments. The decoder 3202 may reconstruct partial geometry and partial attributes from the received bitstream.

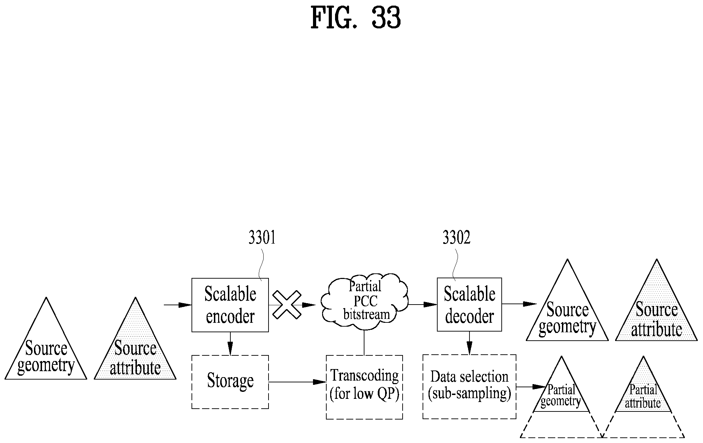

FIG. 33 illustrates a point cloud data transmission/reception device/method according to embodiments.

The point cloud data transmission device/method according to the embodiments, such as the transmission device 10000, the point cloud video encoder 10002, and the transmitter 10003 in FIG. 1, the acquisition 20000-encoding 20001-transmission 20002 in FIG. 2, the encoder in FIG. 4, the transmission device in FIG. 12, the device in FIG. 14, the encoder in FIG. 15, or the reception device 10004, receiver 10005, and point cloud video decoder 10006 in FIG. 1, the transmission 20002-decoding 20003-renderign 20004 in FIG. 2, the decoder in FIGS. 10 and 11, the reception device in FIG. 13, the device in FIG. 14, and the decoder in FIG. 15, may encode or decode point cloud data in a layer structure. Each of the components in FIG. 33 may correspond to hardware, software, processors, and/or a combination thereof.

Embodiments include a method of segmenting and transmitting compressed data for a point cloud based on a given criterion. When layered coding is used, the compressed data may be divided according to layers, which may increase efficiency at the receiving side.

FIG. 33 illustrates the operations at the transmitting side and receiving side in the case where point cloud data consisting of layers is transmitted. If information that enables the entire point cloud data to be reconstructed is transmitted regardless of the performance of the receiver, the receiver needs to perform a process of selecting data corresponding to a required layer (i.e., data selection or sub-sampling) after reconstructing the point cloud data through decoding. In this case, since the delivered bitstream has already been decoded, a delay may occur in the receiver targeting low delay, or decoding may not be performed depending on the receiver performance.

According to embodiments, when the bitstream is divided into slices and delivered, the receiver may selectively deliver a bitstream to the decoder according to the decoder performance or the density of the point cloud data to be represented depending on the application field. In this case, by performing selection before the decoding, the decoder efficiency may increase and decoders with various performances may be supported. In other words, the transmission/-reception device according to the embodiments may select a bitstream to transmit and receive, and may support decoders of different performance by reconstructing the selected bitstream.

The point cloud data transmission/reception method/device according to the embodiments provides efficient spatial random access to point cloud data based on the proposed operations, signaling schemes, and the like.

The method/device according to the embodiments may perform operations including encoding and decoding of point cloud data based on a layer-group based partition structure for large point cloud coding with low delay.

In particular, a compression structure for efficiently storing and transmitting mass point cloud data having a wide distribution and high point density may be provdied.

In addition, for large point clouds with a wide distribution and high density of points, a delay issue may arise due to the large number of bitstreams that need to be processed to access a region of interest. Methods/devices according to embodiments may address this delay issue.

For a hierarchical point cloud structure for compression of large point cloud data with low delay according to embodiments, a tile/brick/slice layer-group/slice subgroup, tile/slice layer-group/slice subgroup, slice layer-group/slice subgroup, or layer-group bbox -> subgroup bbox relationship may be used.

FIG. 34 illustrates a method of transmitting point cloud data according to embodiments.

A point cloud data transmission method according to embodiments includes encoding point cloud data (S3400) and transmitting a bitstream containing the point cloud data (S3401).

S3400 and S3401 may correspond to the point cloud data encoding and transmission described with reference to FIGS. 1, FIG. 2, FIG. 4, FIG. 12, FIG. 14, FIG. 15, FIG. 24, FIG. 25, and FIGS. 31 to 33.

The encoding of the point cloud data includes generating a tree structure of the point cloud data. The tree structure may represent a structure including layers distinguishable by depth (or levels), such as an octree or levels of detail (LODs). The tree structure according to the embodiments may include hierarchical layers, each of which may be distinguished by a depth or level of the tree structure. For example, in an octree structure, the depth increases from the root node to the leaf node, and nodes at the same depth may constitute a single layer.

Further, the encoding of the point cloud data may include dividing the point cloud data into a plurality of groups based on the layers of the tree structure. At least one of the groups may include a plurality of subgroups. The groups may represent layer groups.

The transmission/reception device according to the embodiments may configure the point cloud data in a tree structure and configure the groups based on the layers. For example, multiple layers may be configured as one layer group. The tree structure according to the embodiments may include multiple layer groups. The layer groups may be further divided into subgroups, and a layer group may include a plurality of subgroups.

The tree structure, layer groups, and subgroups according to the embodiments are illustrated in FIGS. 16, 19, and 20 to 22.

The encoding of the point cloud data according to the embodiments includes encoding the point cloud data belonging to the subgroups based on context information. For example, when one of the subgroups belonging to a first layer group is a first subgroup and one of the subgroups belonging to a second layer group is a second subgroup, the point cloud data belonging to the second subgroup may be encoded based on the context information about the first subgroup. The context information about the second subgroup may be saved for encoding point cloud data belonging to another subgroup. In other words, the encoding of the point cloud data according to the embodiments may include encoding the second subgroup based on the context information about the first subgroup, and saving the context information about the second subgroup.

The encoding based on context information according to the embodiments is described with reference to FIG. 25.

The encoding of the point cloud data according to the embodiments may include detecting a subgroup to which a current node (or point) belongs and encoding the current node (or point) based on the information about the detected subgroup. The current node may represent a node (or point) to be encoded. For example, the subgroup to which the current node belongs may be detected as a second subgroup, and the current node may then be encoded with reference to the context of the first subgroup. In this case, the first subgroup may include point cloud data belonging to a parent subgroup of the second subgroup. Detecting a subgroup may have the same meaning as determining a subgroup. In other words, the subgroup containing the current node may be detected based on the bounding box information defined for each subgroup. Alternatively, the subgroup may be determined by assigning an index to the subgroup.

According to embodiments, a parent subgroup may include child subgroups. In a tree structure, the parent subgroup may correspond to a superset of child subgroups. Because the point cloud data belonging to the parent subgroup and the point cloud data belonging to the child subgroups are correlated, the encoding efficiency may be increased by encoding the point cloud data belonging to the child subgroups based on context information about the point cloud data belonging to the parent subgroup. The parent subgroup may belong to a lower layer group, and the child subgroups may belong to a higher layer group. The density of the point cloud data is higher in the higher layer group.

When detecting a subgroup to which the current node belongs, the transmission device/method according to the embodiments may compare the position information about the current node with the bounding box information about the subgroup. For example, when the position of the current node is within the bounding box of the subgroup, it may be recognized that the subgroup is the subgroup to which the current node belongs. The position information about the current node may be compared with the minimum and maximum values of the bounding box of the subgroup.

The transmission device/method according to the embodiments may operate to generate signaling information related to the aforementioned operations and deliver the signaling information to the reception device according to the embodiments. The reception method according to the embodiments may include receiving the related signaling information and decoding the point cloud data based on the signaling information. The related signaling information is illustrated in FIGS. 28 to 30.

The bitstream according to embodiments contains information indicating whether at least one of the layer groups constituting the tree structure includes a plurality of subgroups. For example, this information may be subgroup_enabled_flag as described in FIG. 28. Further, the bitstream according to the embodiments may contain origin information and size information about the bounding box of the subgroup. This information may represent the parameters subgroup_bbox_origin and subgroup_bbox_size, as described in FIG. 29.

Each step of the transmission method according to the foregoing embodiments may be performed by an encoder and a transmitter. Further, each step may be performed by a combination of hardware, such as a processor and memory, and software. Each step may be performed by a plurality of physically separate components, or multiple steps may be performed by a single component. The components capable of performing each of the steps may be referred to using terms such as unit, module, or block. For example, the step of generating a tree structure according to embodiments may be performed by a tree structure generation unit.

FIG. 35 illustrates a method of receiving point cloud data according to embodiments.

The method of receiving point cloud data according to the embodiments may correspond to the transmission method of FIG. 34.

The method of receiving point cloud data according to the embodiments includes receiving a bitstream containing point cloud data (S3500) and decoding the point cloud data (S3501).

S3500 and S3501 may correspond to the reception and decoding of point cloud data described with reference to FIGS. 1, FIG. 2, FIG. 11, FIG. 13, FIG. 14, FIG. 15, FIG. 24, FIG. 26, and FIGS. 31 to 33.

The decoding of the point cloud data includes configuring a tree structure of the point cloud data. The tree structure may represent a structure including layers distinguishable by depth (or levels), such as an octree or levels of detail (LODs). The tree structure according to the embodiments may include hierarchical layers, each of which may be distinguished by a depth or level of the tree structure. For example, in an octree structure, the depth increases from the root node to the leaf node, and nodes at the same depth may constitute a single layer.

Further, the decoding of the point cloud data may include dividing the point cloud data into a plurality of groups based on the layers of the tree structure. At least one of the groups may include a plurality of subgroups. The groups may represent layer groups.

The transmission/reception device according to the embodiments may configure the point cloud data in a tree structure and configure the groups based on the layers. For example, multiple layers may be configured as one layer group. The tree structure according to the embodiments may include multiple layer groups. The layer groups may be further divided into subgroups, and a layer group may include a plurality of subgroups.

The tree structure, layer groups, and subgroups according to the embodiments are illustrated in FIGS. 16, 19, and 20 to 22.

The decoding of the point cloud data according to the embodiments includes decoding the point cloud data belonging to the subgroups based on context information. For example, when one of the subgroups belonging to a first layer group is a first subgroup and one of the subgroups belonging to a second layer group is a second subgroup, the point cloud data belonging to the second subgroup may be decoded based on the context information about the first subgroup. The context information about the second subgroup may be saved for decoding point cloud data belonging to another subgroup. In other words, the decoding of the point cloud data according to the embodiments may include decoding the second subgroup based on the context information about the first subgroup, and saving the context information about the second subgroup.

The decoding based on context information according to the embodiments is described with reference to FIG. 26.

The decoding of the point cloud data according to the embodiments may include detecting a subgroup to which a current node (or point) belongs and decoding the current node (or point) based on the information about the detected subgroup. The current node may represent a node (or point) to be decoded. For example, the subgroup to which the current node belongs may be detected as a second subgroup, and the current node may then be decoded with reference to the context of the first subgroup. In this case, the first subgroup may include point cloud data belonging to a parent subgroup of the second subgroup.

According to embodiments, a parent subgroup may include child subgroups. In a tree structure, the parent subgroup may correspond to a superset of child subgroups. Because the point cloud data belonging to the parent subgroup and the point cloud data belonging to the child subgroups are correlated, the encoding efficiency may be increased by encoding the point cloud data belonging to the child subgroups based on context information about the point cloud data belonging to the parent subgroup. The parent subgroup may belong to a lower layer group, and the child subgroups may belong to a higher layer group. The density of the point cloud data is higher in the higher layer group.

The decoding of the point cloud data according to the embodiments may further include detecting a parent subgroup. For example, when a first subgroup is the parent subgroup of a second subgroup, the first subgroup may be detected in order to decode nodes (or points) belonging to the second subgroup. In the detecting of the parent subgroup, the parent subgroup of the second subgroup may be detected by finding a first layer group that is lower than the second layer group to which the second subgroup belongs, and comparing the bounding box information about the subgroups in the first layer group with the bounding box information about the second subgroup. The bounding box information includes maximum and minimum information. Once the first subgroup that is the parent subgroup of the second subgroup is detected, the nodes (or points) included in the second subgroup may be decoded based on context information about the first subgroup.

The reception device/method according to the embodiments may detect the subgroup to which a node belongs and a parent subgroup based on bounding box information without separate reference layer group information or reference subgroup information.

In detecting the subgroup to which the current node belongs, the reception device/method according to embodiments may compare the position information about the current node with the bounding box information about the subgroup. For example, when the position of the current node is within the bounding box of the subgroup, it may be determined that the subgroup is the subgroup to which the current node belongs. The position information about the current node may be compared with a minimum value and a maximum value of the bounding box of the subgroup.

The reception device/method according to the embodiments may receive related signaling information and decode the point cloud data based thereon. The related signaling information is described with reference to FIGS. 28 to 30.

The bitstream according to embodiments contains information indicating whether at least one of the layer groups constituting the tree structure includes a plurality of subgroups. For example, this information may be subgroup_enabled_flag as described in FIG. 28. Further, the bitstream according to the embodiments may contain origin information and size information about the bounding box of the subgroup. This information may represent the parameters subgroup_bbox_origin and subgroup_bbox_size, as described in FIG. 29.

Each step of the reception method according to the foregoing embodiments may be performed by a decoder and a transmitter. Further, each step may be performed by a combination of hardware, such as a processor and memory, and software. Each step may be performed by a plurality of physically separate components, or multiple steps may be performed by a single component. The components capable of performing each of the steps may be referred to using terms such as unit, module, or block. For example, the step of generating a tree structure according to embodiments may be performed by a tree structure generation unit.

The transmission/reception device/method according to the embodiments may configure layer groups and subgroups for point cloud data to encode and decode nodes (or points) with reference to the context information about the related parent subgroup, thereby increasing the efficiency of data processing. The receiving side can detect the parent subgroup based on the bounding box information even without receiving the identifier information about a separately referenced group. Therefore, the parameters may be efficiently transmitted/received. Furthermore, the range of the geometry occupancy atlas may be optimized based on the bounding box information about the subgroup, and neighbor nodes outside the range of the bounding box of the subgroup may not be referenced. Accordingly, the data processing process may be efficiently performed.

The decoding of point cloud data according to the embodiments may include the operations of 1) determining layer group information, 2) determining subgroup information, and/or 3) updating atlas information. Each of the operations may correspond to each operation of the point cloud data transmission/reception method/device according to embodiments.

1) The determining of the layer group information may include the following operations. Each operation may be performed in sequence, and some operations may be skipped according to embodiments:

Initialize the layer group index, subgroup index, and subgroup bounding box at the starting point of a layer group. At points where the layer group changes except at the starting point of a new layer group, increment the layer group index and initialize the subgroup index to 0.
Load the context state (or context information) saved in the buffer and initialize the context information about the current subgroup. Here, the context information may be initialized to a reference context based on the layer group index and subgroup index.
Update information about the subgroup bounding box (e.g., range, etc.). When the depth increases without the layer group changing, maintain the layer group index, initialize the subgroup index to 0, and save the previous context state. Initialize the context to the reference context based on the layer group index and subgroup index. Update the information about the subgroup bounding box.

2) The determining of the subgroup information may include the following operations. Each operation may be performed in sequence, and some operations may be skipped according to embodiments.

Determine whether the position of the current node (or point) is contained within the subgroup bounding box of the previous node. Detect the subgroup containing the current node and update the index of the subgroup. When the node is the start of a subgroup, detect the parent node information based on the layer group index and subgroup index of the current node.

Initialize the saved context information. The context information may be initialized to the reference context based on the layer group index and subgroup index.

When the subgroup has not changed, initialize the temporarily saved context information. The context may be initialized to the reference context based on the layer group index and subgroup index.

Update the information about the subgroup bounding box.

3) The updating of the atlas information may include the following operations. Each operation may be performed in sequence, and some operations may be skipped according to embodiments.

Update the range for determining whether a neighbor is in the atlas to the range of the subgroup bounding box.

Update the range of neighbors newly defined within the atlas according to the subgroup bounding box. Here, in the case where the boundary of the subgroup bounding box is smaller than the boundary of the atlas, update the boundary range of the atlas based on the subgroup bounding box.

The point cloud data transmission device/method according to the embodiments may update the subgroup information. The subgroup information may be updated per point (or node). At the start of the subgroup and at the position of the node where the subgroup is contiguous, the context, neighbor search range, and planar buffer information may be updated. A subgroup may correspond to one or more slices. A slice according to the embodiments may be referred to as a unit as a single unit contained in a bitstream.

Since subgroups may change within a layer group according to embodiments, information about the subgroups may be updated by checking the information about the subgroups at each point (or, node).

When the range of neighbor nodes is limited, the range of the atlas for effectively using pre-saved occupancy information about neighbor nodes may be updated based on the subgroup bounding box.

The tree structure, layer structure, and the like according to embodiments may be referred to as a data structure.

The data structure may represent an octree structure for geometry data and/or an LOD structure for attribute data. A data structure according to embodiments may represent point cloud data in a dependency relationship and hierarchical structure, wherein upper and lower layers may be distinguished by depth, level, or the like. Further, the octree structure, LODs, layer structure, and the like included in the data structure according to the embodiments may be referred to interchangeably.

The data structure according to the embodiments may be generated by the octree synthesizer 11001 of the geometry encoder and the LOD generator 11008 of the attribute encoder. Similarly, on the receiving side, it may be processed by each corresponding component of the decoder.

The tree structure according to embodiments may include layer groups.

A layer group may include parent-child nodes containing point cloud data. The layer groups may be configured hierarchically, as in a relationship of a parent layer group and a child layer group.

A single layer group may be included in a slice, or multiple layer groups may be included in a slice for transmission/reception. Further, a layer group may be divided (segmented) into a plurality of subgroups. Each layer group and subgroup may be delivered to the receiver based on decoder performance, resolution, and ROI.

Encoding/decoding may be performed for each layer group included in the slice. The encoding/decoding may proceed from parent to child nodes in order. That is, the encoding/decoding may proceed from a lower layer group to a higher layer group.

The context information according to the embodiments may refer to additional information generated when the point cloud data, e.g., geometry data and/or attribute data, is encoded and/or decoded by the arithmetic encoder and/or arithmetic decoder of FIGS. 4 and 11. When encoding and/or decoding the current point cloud data according to the embodiments, the current point cloud data may be efficiently compressed and reconstructed based on the context information derived from the previous point cloud data.

Context loading and referencing may be utilized by storing and loading context information about a subgroup bounding box of a slice that corresponds to or includes or is included in a subgroup bounding box of the current slice. The current subgroup bounding box and the reference subgroup bounding box may be in a parent-child relationship.

The size of a subgroup bounding box may be efficiently set. Nodes located in a region beyond the size of the subgroup bounding box may be considered as unoccupied nodes. In other words, when performing predictive coding from neighbors of the current point, the search range of neighbor points may be limited to be within the region of the subgroup bounding box.

The method of transmitting/receiving point cloud data may include storing context. When terminating the encoding/decoding of the current layer group or the current subgroup and encoding/decoding the next slice, the next layer group, or the next subgroup, the previous context information may be saved. By loading context for layer groups 0 to N (including subgroups) and saving the context, the point cloud data may be encoded/decoded without burdening the buffer.

The transmission/reception device/method according to the embodiments may increase encoding/decoding efficiency by referencing the context for groups or slices that are in a highly relevant parent-child relationship. Thus, a plurality of groups may be processed in parallel, which may improve processing efficiency.

The transmission/reception device/method according to the embodiments may support low-delay compression by taking into account a hierarchical structure in configuring slices for a bitstream containing point cloud data, and may efficiently partially reconstruct the point cloud data.

The transmission/reception device/method according to the embodiments may increase compression efficiency by performing encoding/decoding with reference to context information about a parent subgroup that is relevant to the current subgroup based on the hierarchical structure of the point cloud data. Furthermore, in referencing the parent subgroup related to the current subgroup, the parent subgroup may be detected based on the bounding box information about the subgroup as well as the index information, thereby reducing the amount of transmitted/received data and increasing the efficiency of the data processing process.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Industrial Applicability]

As described above, related details have been described in the best mode for carrying out the embodiments.

[Industrial Applicability]

As described above, the embodiments are fully or partially applicable to a point cloud data transmission/reception device and system. Those skilled in the art may change or modify the embodiments in various ways within the scope of the embodiments. Embodiments may include variations/modifications within the scope of the claims and their equivalents.

**Claims**

1. A method of transmitting point cloud data, the method comprising:

   encoding point cloud data; and
   transmitting a bitstream containing the point cloud data.

2. The method of claim 1, wherein the encoding of the point cloud data comprises:

   generating a tree structure of the point cloud data; and
   dividing the point cloud data into a plurality of groups based on layers of the tree structure,
   wherein at least one of the groups comprises a plurality of subgroups.

3. The method of claim 2, wherein the encoding of the point cloud data comprises:
   encoding the point cloud data belonging to the subgroups based on context information.

4. The method of claim 3, wherein the encoding of the point cloud data comprises:

   encoding, based on context information related to a first subgroup, a second subgroup; and
   saving context information related to the second subgroup.

5. The method of claim 4, wherein the first subgroup contains point cloud data belonging to a parent subgroup of the second subgroup.

6. The method of claim 5, wherein the subgroups are detected by comparing position information about a node with bounding box information about the subgroups.

7. The method of claim 6, wherein the bitstream contains information indicating whether at least one of the groups comprises the plurality of subgroups.

8. The method of claim 7, wherein the bitstream contains origin information and size information related to the bounding boxes of the subgroups.

9. A device for transmitting point cloud data, the device comprising:

   an encoder configured to encode point cloud data; and
   a transmitter configured to transmit a bitstream containing the point cloud data.

10. A method of receiving point cloud data, the method comprising:

    receiving a bitstream containing point cloud data; and
    decoding the point cloud data; comprising.

11. The method of claim 10, wherein the decoding of the point cloud data comprises:

generating a tree structure of the point cloud data; and
dividing the point cloud data into a plurality of groups based on layers of the tree structure,
wherein at least one of the groups comprises a plurality of subgroups.

12. The method of claim 11, wherein the decoding of the point cloud data comprises:
decoding the point cloud data belonging to the subgroups based on context information.

13. The method of claim 12, wherein the decoding of the point cloud data comprises:

decoding, based on context information related to a first subgroup, a second subgroup; and
saving context information related to the second subgroup.

14. The method of claim 13, wherein the first subgroup contains point cloud data belonging to a parent subgroup of the second subgroup.

15. The method of claim 14, wherein the subgroups are determined by comparing position information about a node with bounding box information about the subgroups.

16. The method of claim 15, wherein the first subgroup is detected based on the bounding box information about the second subgroup.

17. The method of claim 16, wherein the bitstream contains information indicating whether at least one of the groups comprises the plurality of subgroups.

18. The method of claim 17, wherein the bitstream contains origin information and size information related to the bounding boxes of the subgroups.

19. A device for receiving point cloud data, the device comprising:

a receiver configured to receive a bitstream containing point cloud data; and
a decoder configured to decode the point cloud data.

# FIG. 1

# FIG. 2

Acquisition (20000) → Ply file
-geometry
-attribute
→ Encoding (20001) → Encoded
-geometry
-attribute bitstream
→ Transmission (20002) → Decoding (20003) → Decoded
-geometry
-attribute
→ Rendering (20004)

Feedback (20005)

Head orientation information, viewport information

Head orientation information, viewport information



# FIG. 3

# FIG. 4

positions        attributes

40000 — Transform coordinates

40006 — Transform colors

40001 — Quantize and remove points (voxelize)

40007 — Transfer attributes

40002 — Analyze octree

40008

Reconstruct geometry

RAHT

40009 — Gnnerate LOD

40003 — Analyze surface approximation

40010 — Lifting

40005

40011 — Quantize coefficients

40004 — Arithmetic encode

40012 — Arithmetic encode

geometry bitstream        atribute bitstream

# FIG. 5

# FIG. 6

# FIG. 7

$$1 + 2 + 4 + 8 = 15$$

FIG. 8

Level of details

# FIG. 9

P0    P1    P4    P3

P6    P7

P9

P5    P8    P2

| Original order | P0, P1, P2, P3, P4, P5, P6, P7, P8, P9 |
| --- | --- |
| LOD-based order | P0, P5, P4, P2 \| P1, P6, P3 \| P9, P8, P7 |

LOD0

LOD1

LOD2

# FIG. 10

geometry
bisteram

bisteram

attribute
bisteram

geometry
decoder

attribute
decoder

decoded
geometry

decoded
point cloud

decoded
attribute

# FIG. 11

# FIG. 12

# FIG. 13

# FIG. 14

# FIG. 15

# FIG. 16

Geo data → G | LoD(0)~LoD(N)

Attr data → A | LoD(0)~LoD(N)

# FIG. 17

| Geo data | G | LoD0 | G | R1 | G | R2 |
|----------|---|------|---|----|----|----|

| Attr data | A | LoD0 | A | R1 | A | R2 |
|-----------|---|------|---|----|----|----|

←—LoD 0—→

←——————LoD 1——————→

←————————————LoD 2————————————→

# FIG. 18

(a)

(b)

# FIG. 19

19000

| bitstream | G | LoD0 | A | LoD0 | G | R1 | A | R1 |

0 (root)
1
2
3
4
5
6
7 (leaf)

LOD 0
LOD 1

19010

| discarded | G | R2 | A | R2 |

| bitstream | G | LoD0 | A | LoD0 | G | R1 | A | R1 | G | R2 |

| discarded | A | R2 |

19011

19001

0 (root)
1
2
3
4
5
6
7 (leaf)

LOD 0
LOD 1

# FIG. 20

# FIG. 21

Geometry coding layer structure(encoder)

(a)

Geometry coding layer structure(decoder)

(b)

FIG. 22

FIG. 23

# FIG. 24

Encoder (layer-group sliceing)

Slice selector

Layer-group 1    Layer-group 2    Layer-group 3

decoder

High-level view (Layer-group 1)

Mic-level view (Layer-group 1) + layer-group 2)

Low-level view (Layer-group 1) + layer-group 2) + layer-group 3)

2400    2400-1    2401    2402

# FIG. 25

```
┌─────────────────────────────────────────┐
│           generate SPS, GPS, LGSI        │
└─────────────────────────────────────────┘
                    │
                    ▼
┌─────────────────────────────────────────┐
│           Determine layer-group          │──── S2501
└─────────────────────────────────────────┘
                    │
                    ▼
┌─────────────────────────────────────────┐
│            Determine subgroup            │──── S2502
└─────────────────────────────────────────┘
                    │
                    ▼
              ╱───────────╲                     S2503
             ╱  Subgroup   ╲
            ╲   changed?    ╱──── No
             ╲─────────────╱
                  │ Yes
                  ▼
┌─────────────────────────────────────────┐
│            Save and load encdoer         │──── S2504
└─────────────────────────────────────────┘
                    │
                    ▼
┌─────────────────────────────────────────┐
│        update geometry occupancy atlas   │◄─── S2505
└─────────────────────────────────────────┘
                    │
                    ▼
┌─────────────────────────────────────────┐
│               Encode node                │──── S2506
└─────────────────────────────────────────┘
                    │
                    ▼
      No      ╱───────────╲                     S2507
   node++    ╱ End of nodes?╲
            ╲               ╱
             ╲─────────────╱
                  │ Yes
                  ▼
      No      ╱───────────╲                     S2508
  depth++    ╱  End of tree?╲
            ╲               ╱
             ╲─────────────╱
                  │ Yes
                  ▼
┌─────────────────────────────────────────┐
│           generate data unit headers     │
└─────────────────────────────────────────┘
                    │
                    ▼
┌─────────────────────────────────────────┐
│         generate geometry bistreams      │
└─────────────────────────────────────────┘
                    │
                    ▼
┌─────────────────────────────────────────┐
│              End of encoding             │
└─────────────────────────────────────────┘
```

# FIG. 26

```
          ┌─────────────────────────────────────┐
          │         Parsing SPS, GPS, LGSI        │
          └─────────────────────────────────────┘
                           │
                           ▼
          ┌─────────────────────────────────────┐
          │         Parsing data unit header      │
          └─────────────────────────────────────┘
                           │
                           ▼
          ┌─────────────────────────────────────┐
          │            Parsing data unit          │
          └─────────────────────────────────────┘
                           │
                           ▼
              ◇ Layer-group slicing enabled? ◇ ──── S2601
                           │               No
                         Yes │
                           ▼
          ┌─────────────────────────────────────┐
          │   update buffers & layer-group parameters │ ── S2602
          └─────────────────────────────────────┘
                           │
                           ▼
          ┌─────────────────────────────────────┐
          │      Parsing dependent data unit header │ ── S2603
          └─────────────────────────────────────┘
                           │
                           ▼
          ┌─────────────────────────────────────┐
          │          Parent subgroup detection     │ ── S2604
          └─────────────────────────────────────┘
                           │
                           ▼
          ┌─────────────────────────────────────┐
          │          input parent node selection   │ ── S2605
          └─────────────────────────────────────┘
                           │
                           ▼
          ┌─────────────────────────────────────┐
          │         Parsing dependent data unit    │ ── S2606
          └─────────────────────────────────────┘
                           │
                           ▼
     No    ◇    End of geometry bitstream?    ◇ ──── S2607
                           │
                         Yes │
                           ▼
          ┌─────────────────────────────────────┐
          │        Generate output point cloud     │ ── S2608
          └─────────────────────────────────────┘
                           │
                           ▼
          ┌─────────────────────────────────────┐
          │            End of decoding             │
          └─────────────────────────────────────┘
```

# FIG. 27

slice 0 | slice n

| SPS | GPS | APS$_0$ | APS$_1$ | TPS | Geom$_0^0$ | Attr$_0^0$ | Attr$_1^0$ | ··· | Geom$_0^n$ | Attr$_0^n$ | Attr$_1^n$ |

Geom_slice_header | Geom_slice_data

Tile(0).tile_bounding_box_xyz0;
Tile(0).tile_bounding_box_whd;
......
Tile(n).tile_bounding_box_xyz0;
Tile(n).tile_bounding_box_whd;

geom_ geom_ parameter_set_id;
geom_tile_id;
geom_slice_id;
geomBoxOrigin;
geom_box_log2_scale;
geom_max_node_size_log2;
geom_num_points;

# FIG. 28a

| seq_parameter_set( ) { | Descriptor |
|---|---|
| simple_profile_compatibility_flag | u(1) |
| dense_profile_compatibility_flag | u(1) |
| predictive_profile_compatibility_flag | u(1) |
| main_profile_compatibility_flag | u(1) |
| reserved_profile_compatibility_18bits | u(18) |
| slice_reordering_constraint_flag | u(1) |
| unique_point_positions_constraint_flag | u(1) |
| level_idc | u(8) |
| sps_seq_parameter_set_id | u(4) |
| frame_ctr_lsb_bits | u(5) |
| slice_tag_bits | u(5) |
| seq_origin_bits | ue(v) |
| if( seq_origin_bits ) { | |
| for( k = 0; k < 3; k++ ) | |
| seq_origin_xyz[ k ] | s(v) |
| seq_origin_log2_scale | ue(v) |
| } | |
| seq_bounding_box_size_bits | ue(v) |
| if( seq_bounding_box_size_bits ) { | |
| for( k = 0; k < 3; k++ ) | |
| seq_bounding_box_size_minus1_xyz[ k ] | u(v) |
| } | |
| seq_unit_numerator_minus1 | ue(v) |
| seq_unit_denominator_minus1 | ue(v) |
| seq_unit_in_metres_flag | u(1) |
| seq_global_scale_factor_log2 | ue(v) |
| seq_global_scale_refinement_num_bits | ue(v) |
| seq_global_scale_factor_refinement_factor | u(v) |
| sps_num_attribute_sets | ue(v) |
| for( attrId = 0; attrId < sps_num_attribute_sets; attrId++ ) { | |
| attribute_dimension_minus1[ attrId ] | ue(v) |
| attribute_instance_id[ attrId ] | ue(v) |
| attribute_bitdepth_minus1[ attrId ] | ue(v) |
| known_attribute_label_flag[ attrId ] | u(1) |
| if( known_attribute_label_flag[ attrId ] ) | |
| known_attribute_label[ attrId ] | ue(v) |
| else | |
| attribute_label_oid[ attrId ] | oid(v) |

# FIG. 28b

| | |
|---|---|
| num_attribute_parameters | ue(v) |
| byte_alignment( ) | |
| for( j = 0; j < num_attribute_parameters; j++ ) | |
| attribute_parameters( attrId ) | |
| } | |
| axis_coding_order | u(3) |
| bypass_stream_enabled_flag | u(1) |
| entropy_continuation_enabled_flag | u(1) |
| sps_extension_flag | u(1) |
| if( sps_extension_flag ) { | |
| layer_group_enabled_flag | u(1) |
| if(layer_group_enabled_flag) { | |
| num_layer_groups_minus1 | u(8) |
| for(i=0; i<=num_layer_groups_minus1; i++) { | |
| layer_group_id[i] | u(8) |
| num_layers_minus1[i] | u(8) |
| subgroup_enabled_flag[i] | u(1) |
| } | |
| if(subgroup_enabled_flags( ) ) { | |
| subgroup_bbox_origin_bits_minus1 | ue(v) |
| subgroup_bbox_size_bits_minus1 | ue(v) |
| } | |
| } | |
| while( more_data_in_data_unit( ) ) | |
| sps_extension_data_flag | u(1) |
| } | |
| byte_alignment( ) | |
| } | |

# FIG. 29

| dependent_geometry_data_unit_header( ) { | Descriptor |
|---|---|
| dgsh_geometry_parameter_set_id | u(4) |
| dgsh_slice_id | ue(v) |
| layer_group_id | u(8) |
| if(subgroup_enabled_flag[layer_group_id]) { | |
| subgroup_id | u(8) |
| for(i=0; i<3; i++) | |
| subgroup_bbox_origin[i] | u(v) |
| for(i=0; i<3; i++) | |
| subgroup_bbox_size[i] | u(v) |
| } | |
| ref_layer_group_id | u(8) |
| if(subgroup_enabled_flag[layer_group_id]) | |
| ref_subgroup_id | u(8) |
| byte_alignment( ) | |
| } | |

# FIG. 30

| layer_group_struture_inventory( ) { | Descriptor |
|---|---|
|     lgsi_seq_parameter_set_id | u(4) |
|     lgsi_frame_ctr_lsb_bits | u(5) |
|     lgsi_frame_ctr_lsb | u(v) |
|     lgsi_num_slice_ids_minus1 | u(8) |
|     if(lgsi_num_slice_ids_minus1 >= 0 ) { | |
|         for(sId=0; sId<=lgsi_num_slice_ids_minus1; sId++){ | |
|             lgsi_slice_id[sId] | ue(v) |
|             lgsi_num_layer_groups_minus1[sId] | u(8) |
|             lgsi_subgroup_bbox_origin_bits_minus1[sId] | ue(v) |
|             lgsi_subgroup_bbox_size_bits_minus1[sId] | ue(v) |
|             for(i=0; i<=lgsi_num_layer_groups_minus1[sId]; i++){ | |
|                 lgsi_layer_group_id[sId][i] | u(8) |
|                 lgsi_num_layers_minus1[sId][i] | u(8) |
|                 lgsi_num_subgroups_minus1[sId][i] | u(16) |
|                 for(j=0; j<=lgsi_num_subgroups_minus1[sId][i]; j++){ | |
|                     lgsi_subgroup_id[sId][i][j] | u(16) |
|                     lgsi_parent_subgroup_id[sId][i][j] | u(16) |
|                   for(k=0; k<3; k++) | |
|                     lgsi_subgroup_bbox_origin[sId][i][j][k] | u(v) |
|                   for(k=0; k<3; k++) | |
|                     lgsi_subgroup_bbox_origin[sId][i][j][k] | u(v) |
|                 } | |
|             } | |
|         } | |
|     } | |
|     lgsi_origin_bits_minus1 | ue(v) |
|     for(k=0; k<3; k++) | |
|         lgsi_origin_xyz[k] | se(v) |
|     lgsi_origin_log2_scale | ue(v) |
|     byte_alignment( ) | |
| } | |

# FIG. 31

# FIG. 32

# FIG. 33

FIG. 34

```
┌────────────────────────────────┐
│     Encode point cloud data     │───S3400
└────────────────────────────────┘
                 │
                 ▼
┌────────────────────────────────┐
│   Transmit bitstream containing │───S3401
│        point cloud data         │
└────────────────────────────────┘
```

# FIG. 35

```
┌─────────────────────────────────┐
│   Receive bitstream containing   │ ──S3500
│         point cloud data         │
└─────────────────────────────────┘
                 │
                 ▼
┌─────────────────────────────────┐
│      Decode point cloud data     │ ──S3501
└─────────────────────────────────┘
```

## INTERNATIONAL SEARCH REPORT

International application No.

**PCT/KR2023/000574**

### A. CLASSIFICATION OF SUBJECT MATTER

**H04N 19/30**(2014.01)i; **H04N 19/119**(2014.01)i; **H04N 19/597**(2014.01)i; **H04N 19/184**(2014.01)i; **H04N 19/44**(2014.01)i; **H04N 19/96**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/30(2014.01); G06T 9/00(2006.01); H04N 13/161(2018.01); H04N 13/194(2018.01); H04N 19/91(2014.01); H04N 19/96(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 부호화(encoding), 복호화(decoding), 비트스트림 (bitstream), 서브그룹(subgroup), 컨텍스트(context)

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0068041 A (BLACKBERRY LIMITED) 08 June 2021 (2021-06-08)<br>See paragraphs [0002], [0004], [0041], [0055]-[0059], [0085] and [0122]; claim 1; and figures 1-2. | 1,9-10,19 |
| Y | | 2-8,11-18 |
| Y | 허해연 등. 포인트 클라우드 옥트리 구조의 문맥 기반 압축. 2017년 대한전자공학회 하계학술대회. VOL. 40, NO. 01, pp. 1111-1114, June 2017 (XU, Haiyan et al. Context-based compression of point cloud octree structure. Summer Annual Conference of IEIE 2017.)<br>See pages 1111-1114. | 2-8,11-18 |
| Y | KR 10-2021-0022115 A (HUAWEI TECHNOLOGIES CO., LTD.) 02 March 2021 (2021-03-02)<br>See paragraph [0279]. | 8,18 |
| X | KR 10-2344072 B1 (LG ELECTRONICS INC.) 28 December 2021 (2021-12-28)<br>See claim 1. | 1,9-10,19 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 May 2023** | **04 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/000574**

**C.    DOCUMENTS CONSIDERED TO BE RELEVANT**

| Category* | Citation of document, with indication, where appropriate, of the relevant passages | Relevant to claim No. |
|---|---|---|
| X | KR 10-2021-0152186 A (ELECTRONICS AND TELECOMMUNICATIONS RESEARCH INSTITUTE et al.) 15 December 2021 (2021-12-15)<br>See paragraphs [0075]-[0077]; claim 6; and figures 1a and 3a. | 1,9-10,19 |

Form PCT/ISA/210 (second sheet) (July 2022)

**INTERNATIONAL SEARCH REPORT**
Information on patent family members

International application No.

**PCT/KR2023/000574**

| Patent document cited in search report | | | Publication date (day/month/year) | Patent family member(s) | | | Publication date (day/month/year) |
|---|---|---|---|---|---|---|---|
| KR | 10-2021-0068041 | A | 08 June 2021 | CN | 112789804 | A | 11 May 2021 |
| | | | | EP | 3937140 | A1 | 12 January 2022 |
| | | | | JP | 2022-503986 | A | 12 January 2022 |
| | | | | KR | 10-2021-0068040 | A | 08 June 2021 |
| | | | | US | 11455749 | B2 | 27 September 2022 |
| | | | | US | 2022-0392118 | A1 | 08 December 2022 |
| | | | | WO | 2020-070192 | A1 | 09 April 2020 |
| KR | 10-2021-0022115 | A | 02 March 2021 | CN | 110662087 | A | 07 January 2020 |
| | | | | CN | 110662087 | B | 11 May 2021 |
| | | | | EP | 3806043 | A1 | 14 April 2021 |
| | | | | JP | 2021-529482 | A | 28 October 2021 |
| | | | | JP | 7057453 | B2 | 19 April 2022 |
| | | | | KR | 10-2508894 | B1 | 09 March 2023 |
| | | | | US | 11328450 | B2 | 10 May 2022 |
| | | | | US | 2022-0301229 | A1 | 22 September 2022 |
| KR | 10-2344072 | B1 | 28 December 2021 | CN | 114930813 | A | 19 August 2022 |
| | | | | EP | 4075797 | A1 | 19 October 2022 |
| | | | | JP | 2023-509086 | A | 06 March 2023 |
| | | | | KR | 10-2021-0089573 | A | 16 July 2021 |
| | | | | US | 11341687 | B2 | 24 May 2022 |
| | | | | US | 2021-0209807 | A1 | 08 July 2021 |
| | | | | WO | 2021-141264 | A1 | 15 July 2021 |
| KR | 10-2021-0152186 | A | 15 December 2021 | None | | | |

Form PCT/ISA/210 (patent family annex) (July 2022)